# EUROPEAN PATENT APPLICATION

(11) **EP 3 459 344 A1**
(43) Date of publication of application: **27.03.2019**
(21) Application number: 17798976.1
(22) Date of filing: 03.03.2017
(51) Int. Cl.: A01G 7/00, A63F 13/217, A63F 13/65, G06N 3/00, G06Q 50/02

(54) **INFORMATION PROCESSING DEVICE, PROGRAM, AND INFORMATION PROCESSING METHOD**

(30) Priority: 18.05.2016 JP 2016099729
(71) Applicant: Sony Corporation, Tokyo 108-0075 (JP)
(72) Inventor: MATSUZAWA, Sota, Tokyo 108-0075 (JP); FUJITA, Takuya, Tokyo 108-0075 (JP); KANEMOTO, Katsuyoshi, Tokyo 108-0075 (JP)
(74) Representative: MFG Patentanwälte Meyer-Wildhagen Meggle-Freund Gerhard PartG mbB
(86) International application number: PCT/JP2017/008607
(87) International publication number: WO 2017/199539

(57) **Abstract**

[Object] To implement display of a nurture target that conforms more closely to a real environment.

[Solution] Provided is an information processing apparatus including: a determination unit configured to determine, on a basis of collected sensor information and a nurture model associated with a nurture target, a nurture state of the nurture target; and an output control unit configured to control an output related to the nurture target, in accordance with the nurture state of the nurture target. Also provided is an information processing method including: determining, by a processor, on a basis of collected sensor information and a nurture model associated with a nurture target, a nurture state of the nurture target; and controlling an output related to the nurture target, in accordance with the nurture state of the nurture target.

## Description

### Technical Field

The present disclosure relates to an information processing apparatus, a program, and an information processing method.

### Background Art

In recent years, a sensor that acquires various types of states in a real environment has become widespread. In addition, a variety of services that uses collected sensor information is proposed. For example, Patent Literature 1 discloses an information processing apparatus that presents a growth status of a living organism in a real environment, to the user using an agent image.

### Citation List

### Patent Literature

Patent Literature 1: JP 2011-248502A

### Disclosure of Invention

### Technical Problem

Nevertheless, in the information processing apparatus described in Patent Literature 1, it is difficult to represent a growth status of a living organism that does not exist in the real environment. In addition, the method described in Patent Literature 1 cannot be said to be sufficient in performing representation in accordance with a growth property of a living organism.

In view of the foregoing, the present disclosure proposes an information processing apparatus, a program, and an information processing method that are novel and improved, and can implement display of a nurture target that conforms more closely to a real environment.

### Solution to Problem

According to the present disclosure, there is provided an information processing apparatus including: a determination unit configured to determine, on a basis of collected sensor information and a nurture model associated with a nurture target, a nurture state of the nurture target; and an output control unit configured to control an output related to the nurture target, in accordance with the nurture state of the nurture target.

### Advantageous Effects of Invention

As described above, according to the present disclosure, it becomes possible to implement display of a nurture target that conforms more closely to a real environment. Note that the effects described above are not necessarily limitative. With or in the place of the above effects, there may be achieved any one of the effects described in this specification or other effects that may be grasped from this specification.

### Brief Description of Drawings

FIG. 1 is a system configuration example according to a first embodiment of the present disclosure.
FIG. 2 is a functional block diagram of a sensor apparatus, an information processing apparatus, and an output apparatus according to the embodiment.
FIG. 3 is a conceptual diagram illustrating an example of a nurture condition according to the embodiment.
FIG. 4 is a conceptual diagram for describing nurture model generation that is based on intellectual information according to the embodiment.
FIG. 5 is a conceptual diagram for describing nurture model generation that uses machine learning according to the embodiment.
FIG. 6 is a conceptual diagram for describing nurture state determination that is based on a recognition result of a real object according to the embodiment.
FIG. 7 is a conceptual diagram for describing nurture state determination of a plurality of targets according to the embodiment.
FIG. 8 is a conceptual diagram for describing nurture state determination that uses sensor information pieces at a plurality of points according to the embodiment.
FIG. 9 is a conceptual diagram for describing nurture state determination that uses accumulated sensor information pieces according to the embodiment.
FIG. 10 is a conceptual diagram for describing output control of scent and flavor according to the embodiment.
FIG. 11 is a conceptual diagram for describing control of environment reproduction that is based on sensor information according to the embodiment.
FIG. 12 is a flowchart illustrating a flow of control performed by the information processing apparatus according to the embodiment.
FIG. 13 is a conceptual diagram illustrating an overview according to a second embodiment of the present disclosure.
FIG. 14 is an image diagram illustrating an example of display control that is based on a surrounding environment according to the embodiment.
FIG. 15 is an image diagram illustrating an example of display of a nurture target that is performed by a plurality of output units according to the embodiment.
FIG. 16 is an image diagram illustrating an example of a three-dimensional video displayed by an wearable-type output apparatus according to the embodiment.
FIG. 17 is an image diagram illustrating a haptic output performed by an wearable-type output apparatus according to the embodiment.
FIG. 18A is an image diagram illustrating a display example of an advertisement according to the embodiment.
FIG. 18B is an image diagram illustrating a display example of an advertisement according to the embodiment.
FIG. 19 is a hardware configuration example according to the present disclosure.

### Mode(s) for Carrying Out the Invention

Hereinafter, (a) preferred embodiment(s) of the present disclosure will be described in detail with reference to the appended drawings. Note that, in this specification and the appended drawings, structural elements that have substantially the same function and structure are denoted with the same reference numerals, and repeated explanation of these structural elements is omitted.

Note that the description will be given in the following order.
1. First embodiment
   1.1. System configuration example according to first embodiment
   1.2. Sensor apparatus 10 according to first embodiment
   1.3. Information processing apparatus 20 according to first embodiment
   1.4. Output apparatus 30 according to first embodiment
   1.5. Specific example of nurture model
   1.6. Generation of nurture model
   1.7. Details of nurture state determination
   1.8. Control of output other than display
   1.9. Control of environment reproduction that is based on sensor information
   1.10. Flow of control performed by information processing apparatus 20
2. Second embodiment
   2.1. Overview of second embodiment
   2.2. Variation of nurture target
   2.3 Output control according to second embodiment
   2.4. Expansion of game element
   2.5. Cooperation with IoT device
3. Hardware configuration example
4. Conclusion

### <1. First embodiment>

### «1.1. System configuration example according to first embodiment»

First of all, a system configuration example according to a first embodiment of the present disclosure will be described. As one character, an information processing method according to the present embodiment determines, on the basis of sensor information collected in a real environment, and a nurture model associated with a nurture target, a nurture state of the nurture target. In addition, the information processing method according to the present embodiment can control, in accordance with a nurture state of a nurture target, various types of outputs related to the nurture target.

The information processing method according to the present embodiment can be applied to the field of agriculture, for example. According to the information processing method according to the present embodiment, it becomes possible to determine a nurture state of a real object cultivated in a remote place, for example, and cause the nurture state of the real object to be displayed on various types of output apparatuses. In addition, according to the information processing method according to the present embodiment, by determining a nurture state of a nurture target on the basis of sensor information collected from a real environment, it becomes possible to perform growth prediction of the nurture target in various types of real environments.

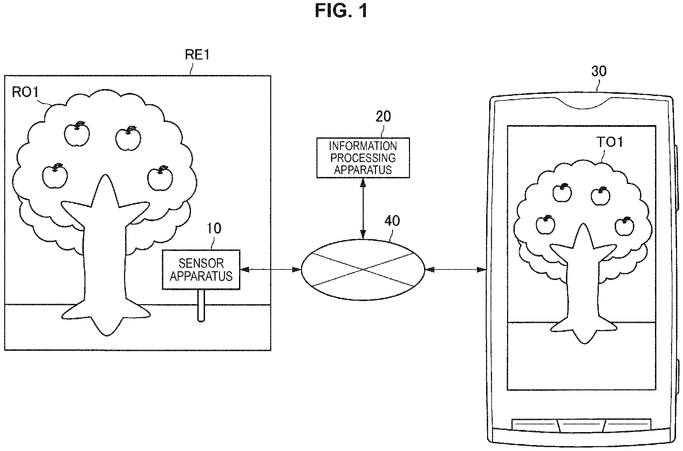

FIG. 1 is a system configuration example according to the present embodiment. Referring to FIG. 1, an information processing system according to the present embodiment includes a sensor apparatus 10, an information processing apparatus 20, and an output apparatus 30. In addition, the sensor apparatus 10, the information processing apparatus 20, and the output apparatus 30 are connected via a network 40 so as to be able to communicate with each other.

### (Sensor apparatus 10)

The sensor apparatus 10 according to the present embodiment may be a device that collects a variety of environment information pieces in a real environment. In the example illustrated in FIG. 1, the sensor apparatus 10 is installed in a real environment RE1, and measures a variety of environment states related to the real environment RE1. In addition, the sensor apparatus 10 has a function of recognizing a real object existing in the real environment RE1. In the example illustrated in FIG. 1, the sensor apparatus 10 recognizes a real object RO1, and transmits the recognized information to the information processing apparatus 20 to be described later. The sensor apparatus 10 according to the present embodiment can be implemented as various types of devices including one or more sensors. Thus, the sensor apparatus 10 according to the present embodiment may be a dedicated device including a plurality of sensors, or may be a general-purpose device such as a Personal Computer (PC), a tablet, and a smartphone.

### (Information processing apparatus 20)

The information processing apparatus 20 according to the present embodiment has a function of determining, on the basis of sensor information received from the sensor apparatus 10, and a nurture model associated with a nurture target, a nurture state of the nurture target. In addition, the information processing apparatus 20 according to the present embodiment has a function of controlling an output related to the nurture target, in accordance with the determined nurture state. In the example illustrated in FIG. 1, the information processing apparatus 20 controls display of the nurture target that is performed by the output apparatus 30. The information processing apparatus 20 according to the present embodiment may be a PC, a smartphone, a tablet, or the like, for example.

### (Output apparatus 30)

The output apparatus 30 according to the present embodiment may be a device that performs various types of outputs related to the nurture target, on the basis of the control of the information processing apparatus 20. In the example illustrated in FIG. 1, the output apparatus 30 outputs, onto a display screen, display related to the nurture state of the nurture target that has been determined by the information processing apparatus 20. The output apparatus 30 according to the present embodiment may be a general-purpose device such as a PC, a smartphone, or a tablet that performs display related to the nurture target, as illustrated in FIG. 1. In addition, as described later, the output apparatus 30 according to the present embodiment may be various types of dedicated devices that can output scent and flavor related to the nurture target.

### (Network 40)

The network 40 has a function of connecting the sensor apparatus 10, the information processing apparatus 20, and the output apparatus 30 to each other. The network 40 may include a public line network such as the internet, a telephone line network, and a satellite communication network, various types of Local Area Networks (LAN) including the Ethernet (registered trademark), a Wide Area Network (WAN), and the like. In addition, the network 40 may include a leased line network such as an Internt Protocol-Virtual Private Network (IP-VPN). In addition, the network 40 may include a radio communication network such as Wi-Fi (registered trademark) and Bluetooth (registered trademark).

A system configuration example according to the present embodiment has been described above. As described above, according to the information processing method according to the present embodiment, it becomes possible to determine a nurture state of a nurture target on the basis of sensor information collected from a real environment, and control an output such as display related to the nurture target. In other words, according to the sensor apparatus 10, the information processing apparatus 20, and the output apparatus 30 according to the present embodiment, it becomes possible to implement more accurate growth prediction of a nurture target in various types of real environments.

Note that, in the above description that uses FIG. 1, the description has been given using, as an example, a case where the sensor apparatus 10, the information processing apparatus 20, and the output apparatus 30 are respectively implemented as independent devices, but the system configuration example according to the present embodiment is not limited to this example. The sensor apparatus 10, the information processing apparatus 20, and the output apparatus 30 according to the present embodiment may be implemented as a single device. In this case, for example, the information processing apparatus 20 may have a sensor function of collecting a variety of environment states related to the real environment RE1. In addition, in this case, the information processing apparatus 20 may include a display unit that performs display related to a nurture state of a nurture target. The system configuration example according to the present embodiment can be flexibly modified in accordance with a property, an operational condition, and the like of the nurture target.

In addition, in the example illustrated in FIG. 1, the real object RO1 existing in the real environment RE1 is illustrated, but in the information processing method according to the present embodiment, the real object RO1 is not always required. The information processing apparatus 20 according to the present embodiment can determine, on the basis of sensor information collected in the real environment RE1, and a nurture model associated with a nurture target that is to be described later, a nurture state of the nurture target.

### «1.2. Sensor apparatus 10 according to first embodiment»

Next, a functional configuration of the sensor apparatus 10 according to the present embodiment will be described in detail. As described above, the sensor apparatus 10 according to the present embodiment has a function of measuring a variety of environment states in a real environment. In addition, the sensor apparatus 10 has a function of recognizing a real object existing in the real environment. Further, the sensor apparatus 10 according to the present embodiment may have a function of measuring a variety of states related to the above-described real object.

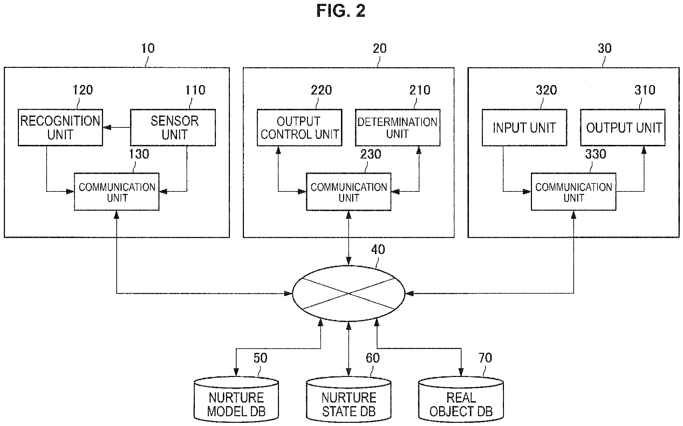

FIG. 2 is a functional block diagram of the sensor apparatus 10, the information processing apparatus 20, and the output apparatus 30 according to the present embodiment. Referring to FIG. 2, the sensor apparatus 10 according to the present embodiment includes a sensor unit 110, a recognition unit 120, and a communication unit 130. Hereinafter, configurations indicated above will be described in detail mainly based on the characteristics of the configurations.

### (Sensor unit 110)

The sensor unit 110 has a function of measuring a variety of environment states in a real environment. For example, the sensor unit 110 according to the present embodiment may measure a weather state related to the real environment, or may measure a nutrient state of soil related to the real environment, and the like. Thus, the sensor unit 110 according to the present embodiment may include various types of sensors for measuring the environment states as described above.

For example, the sensor unit 110 may include various types of light sensors such as an illuminance sensor, a visible light sensor, an infrared ray sensor, and an ultraviolet sensor. In addition, the sensor unit 110 may include a temperature sensor, a humidity sensor, a barometric sensor, a carbon dioxide sensor, a moisture detection sensor, a microphone, and the like.

In addition, the sensor unit 110 may include various types of sensors for measuring states of soil, water quality, and the like that are related to a real environment. For example, the sensor unit 110 can include sensors for measuring an amount of oxygen, an amount of carbon dioxide, an amount of moisture, hardness, pH, temperature, a nutrient element, salinity concentration, and the like that are related to the soil and the water quality. Note that the above-described nutrient element may include nitrogen, phosphoric acid, kalium, calcium, magnesium, sulfur, manganese, molybdenum, boracic acid, zinc, chlorine, copper, iron, or the like, for example.

Further, the sensor unit 110 may include sensors for measuring various types of states related to a real object existing in a real environment. In this case, the sensor unit 110 may include an image capturing sensor, an ultrasonic sensor, a sugar content sensor, a salinity concentration sensor, or various types of chemical sensors, for example. Here, the above-described chemical sensors may include a sensor for measuring plant hormone having a growth promoting activity such as ethylene and auxin.

### (Recognition unit 120)

The recognition unit 120 has a function of recognizing a real object existing in a real environment, on the basis of sensor information collected by the sensor unit 110, and object information included in a real object DB 70. The recognition unit 120 may perform recognition of a real object by comparing information collected by an image capturing sensor, an ultrasonic sensor, or the like that is included in the sensor unit 110, and object information included in the real object DB 70, for example. The recognition unit 120 according to the present embodiment can recognize a plant, an animal, and the like that exist in the real environment, for example. Here, the above-described animal may include an insect kind such as aphid, for example, and the above-described plant may include seaweeds such as brown seaweed. In addition, the recognition unit 120 can also recognize fungi including mold, yeast, champignon, and the like, and bacteria.

### (Communication unit 130)

The communication unit 130 has a function of performing information communication with various types of devices connected via the network 40. Specifically, the communication unit 130 can transmit sensor information collected by the sensor unit 110, and real object information recognized by the recognition unit 120, to the information processing apparatus 20. In addition, the communication unit 130 can receive object information related to a real object, from the real object DB 70.

### <<1.3. Information processing apparatus 20 according to first embodiment>>

Next, a functional configuration of the information processing apparatus 20 according to the present embodiment will be described in detail. The information processing apparatus 20 according to the present embodiment has a function of determining, on the basis of collected sensor information and a nurture model associated with a nurture target, a nurture state of the nurture target. In addition, the information processing apparatus 20 according to the present embodiment has a function of controlling, in accordance with a nurture state of a nurture target, an output related to the nurture target. In addition, the information processing apparatus 20 according to the present embodiment may determine a nurture state of a nurture target on the basis of a result of recognition performed by the above-described recognition unit 120.

Referring to FIG. 2, the information processing apparatus 20 according to the present embodiment includes a determination unit 210, an output control unit 220, and a communication unit 230. Hereinafter, configurations indicated above will be described in detail mainly based on the characteristics of the configurations.

### (Determination unit 210)

The determination unit 210 has a function of determining, on the basis of collected sensor information and a nurture model associated with a nurture target, a nurture state of the nurture target. In addition, the determination unit 210 has a function of causing the determined nurture state of the nurture target to be stored into a nurture state DB 60. At this time, the determination unit 210 may determine, on the basis of sensor information of a real environment that has been collected by the sensor apparatus 10, and a nurture model associated with a nurture target that is included in a nurture model DB 50, a nurture state of the nurture target. For example, in a case where a nurture target is an apple, the determination unit 210 may determine, by comparing sensor information collected by the sensor apparatus 10, and a nurture model of an apple that is included in the nurture model DB 50, a nurture state of the nurture target.

In addition, the determination unit 210 may determine a nurture state of a nurture target on the basis of a result of recognition performed by the recognition unit 120 of the sensor apparatus 10. At this time, the determination unit 210 can determine a nurture state of a nurture target on the basis of a nurture state of a real object recognized by the recognition unit 120, for example. In addition, the determination unit 210 may determine a nurture state of a nurture target on the basis of the type of a real object recognized by the recognition unit 120.

In addition, the determination unit 210 can also determine a nurture state of a nurture target on the basis of accumulated sensor information pieces. In this case, the determination unit 210 may determine a nurture state of a nurture target on the basis of time-series sensor information collected in the real environment in the past, recorded weather information, and the like.

In addition, the determination unit 210 may determine a nurture state of a nurture target on the basis of sensor information pieces collected at a plurality of points. In this case, the determination unit 210 may determine nurture states of a plurality of nurture targets on the basis of the sensor information pieces collected at the respective points, or may determine a nurture state of a single nurture target on the basis of the sensor information pieces collected at the plurality of points. In addition, the determination unit 210 may determine nurture states of a plurality of nurture targets on the basis of sensor information collected at a single point.

Furthermore, the determination unit 210 according to the present embodiment has a function of generating a nurture model associated with a nurture target, on the basis of collected various types of information. At this time, the determination unit 210 can generate the above-described nurture model on the basis of intellectual information collected from a network, for example.

In addition, the determination unit 210 can generate the above-described nurture model on the basis of collected sensor information and a nurture state of a real object recognized by the recognition unit 120, for example. For example, the determination unit 210 may generate the nurture model on the basis of a result of machine learning that uses, as inputs, collected sensor information and a nurture state of a real object. Note that the details of the functions that the determination unit 210 according to the present embodiment has will be described later.

### (Output control unit 220)

The output control unit 220 has a function of controlling, in accordance with a nurture state of a nurture target that has been determined by the determination unit 210, an output related to the nurture target. For example, the output control unit 220 may control display related to a nurture state of a nurture target. In addition, the output control unit 220 can also control display related to the nurture target, on the basis of a result of recognition performed by the recognition unit 120 of the sensor apparatus 10.

In addition, the output control unit 220 has a function of performing output control related to an output other than display of a nurture target. For example, the output control unit 220 according to the present embodiment may control an output of scent corresponding to a nurture state of a nurture target. In addition, for example, the output control unit 220 may control an output of flavor corresponding to a nurture state of a nurture target.

Further, the output control unit 220 has a function of controlling reproduction of an environment state that is based on collected sensor information. Note that the details of the functions that the output control unit 220 according to the present embodiment has will be described later.

### (Communication unit 230)

The communication unit 230 has a function of performing information communication with various types of devices and databases that are connected via the network 40. Specifically, the communication unit 230 can receive sensor information collected by the sensor apparatus 10, and real object information recognized by the sensor apparatus 10. In addition, the communication unit 230 may receive nurture model information related to a nurture target, from the nurture model DB 50, on the basis of the control of the determination unit 210. Further, the communication unit 230 may transmit information related to a nurture state of a nurture target that has been determined by the determination unit 210, to the nurture state DB 60. In addition, the communication unit 230 can transmit output information related to the nurture target, to the output apparatus 30, on the basis of the control of the output control unit 220.

### <<1.4. Output apparatus 30 according to first embodiment>>

Next, a functional configuration of the output apparatus 30 according to the present embodiment will be described in detail. As described above, the output apparatus 30 according to the present embodiment has a function of performing various types of outputs corresponding to a nurture state of a nurture target, on the basis of the control of the information processing apparatus 20.

Referring to FIG. 2, the output apparatus 30 according to the present embodiment includes an output unit 310, an input unit 320, and a communication unit 330. Hereinafter, configurations indicated above will be described in detail mainly based on the characteristics of the configurations.

### (Output unit 310)

The output unit 310 has a function of performing various types of outputs corresponding to a nurture state of a nurture target, on the basis of the control of the information processing apparatus 20. For example, the output unit 310 may perform display corresponding to a nurture state of a nurture target. The above-described function may be implemented by a Cathode Ray Tube (CRT) display device, a Liquid Crystal Display (LCD) device, or an Organic Light Emitting Diode (OLED) device, for example. In addition, the output unit 310 may have a function as an input unit that receives an information input from the user. The function as an input unit can be implemented by a touch panel, for example.

In addition, the output unit 310 may further have a function of outputting scent and flavor that correspond to a nurture state of a nurture target. In this case, the output unit 310 may include configurations for making up the above-described scent and flavor on the basis of the control of the information processing apparatus 20. For example, the output unit 310 can output scent corresponding to a nurture state of a nurture target, by performing blending of essential oils on the basis of the control of the information processing apparatus 20.

### (Input unit 320)

The input unit 320 has a function of receiving an information input from the user, and delivering the input information to the devices connecting to the network 40 that include the output apparatus 30. The above-described function may be implemented by a keyboard mouse, various types of pointers, buttons, switches, and the like, for example.

### (Communication unit 330)

The communication unit 330 has a function of performing information communication with various types of devices connected via the network 40. Specifically, the communication unit 330 can receive various types of control information generated by the information processing apparatus 20. In addition, the communication unit 330 may transmit the input information received by the input unit 320, to the information processing apparatus 20.

The functional configurations of the sensor apparatus 10, the information processing apparatus 20, and the output apparatus 30 according to the present embodiment have been described in detail above. According to these configurations, it becomes possible to implement highly-accurate growth prediction of a nurture target in various types of real environments. Note that the functional block diagram illustrated in FIG. 2 is merely an exemplification, and the functional configurations of the sensor apparatus 10, the information processing apparatus 20, and the output apparatus 30 are not limited to this example.

For example, the above description has been given using, as an example, a case where the recognition of a real object is performed by the sensor apparatus 10. Nevertheless, the object recognition function according to the present embodiment may be implemented by the information processing apparatus 20. In this case, the information processing apparatus 20 may perform recognition of a real object on the basis of sensor information collected by the sensor apparatus 10, and object information included in the real object DB 70.

In addition, for example, the above description has been given using, as an example, a case where the nurture model DB 50, the nurture state DB 60, and the real object DB 70 are connected to the devices via the network 40. Nevertheless, the above-described DBs may be incorporated as components constituting the devices. For example, the information processing apparatus 20 may include a nurture state storage unit or the like that has a function equivalent to the nurture state DB 60. The functional configuration according to the present embodiment can be appropriately changed depending on the specification, an information amount, and the like of each device.

### <<1.5. Specific example of nurture model>>

Next, a specific example of a nurture model according to the present embodiment will be described. As described above, the determination unit 210 of the information processing apparatus 20 according to the present embodiment can determine, on the basis of collected sensor information and a nurture model associated with a nurture target, a nurture state of the nurture target. Here, the above-described nurture model may include at least one or more nurture conditions for each element related to the nurture target, for example. The determination unit 210 can determine a nurture state of a nurture target on the basis of the collected sensor information and the above-described nurture conditions.

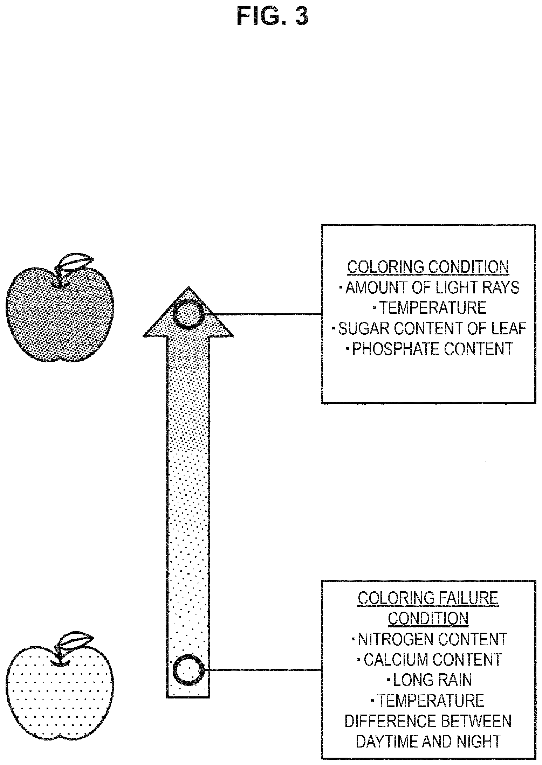

FIG. 3 is a conceptual diagram illustrating an example of a nurture condition included in a nurture model according to the present embodiment. FIG. 3 illustrates an example of a nurture condition set in a case where a nurture target is an apple. Referring to FIG. 3, it can be seen that a coloring condition and a coloring failure condition are set as nurture conditions in a nurture model of an apple according to the present embodiment. In this manner, a good condition and a bad condition may be set in the nurture model according to the present embodiment, for each element such as color, a size, and a shape of the nurture target.

In addition, as a coloring condition of an apple that is exemplified in FIG. 3, an amount of light rays, temperature, sugar content of leaf, and phosphate content are set. Here, more detailed threshold values may be set for the above-described respective items. For example, for the amount of light rays that is related to the coloring condition, for example, a threshold value such as light of 80 thousands lux or more, or being exposed to light for five hours or more per day may be set. In addition, for example, for the temperature related to the coloring condition, a threshold value such as temperature of around 15 degrees may be set.

The determination unit 210 according to the present embodiment can determine a nurture state of a nurture target by comparing states of daylight and temperature that are included in the collected sensor information, and the above-described threshold values.

In addition, as a coloring failure condition of an apple that is exemplified in FIG. 3, nitrogen content, calcium content, long rain, a temperature difference between daytime and night, and the like are set. Here, similarly to the coloring condition, each item related to the coloring failure condition may include a more detailed threshold value. The determination unit 210 according to the present embodiment can determine a nurture state of a nurture target on the basis of nitrogen content indicated by the sensor information exceeding a threshold value set in the coloring failure condition, for example.

In this manner, the determination unit 210 according to the present embodiment can determine a nurture state of a nurture target by comparing collected sensor information and a nurture condition of each element that is included in a nurture model. At this time, the determination unit 210 may determine the above-described nurture state on the basis of the number of items exceeding threshold values of a good condition that are set in the nurture model, and the number of items exceeding threshold values set in a bad condition, for example. In addition, the items set in the good condition and the bad condition may be weighted in accordance with importance degrees or the like. Furthermore, the number of nurture conditions included in the nurture model may be three or more. In the information processing method according to the present embodiment, it is possible to implement more accurate nurture state determination by setting a nurture condition in accordance with the property of a nurture target.

### <<1.6. Generation of nurture model>>

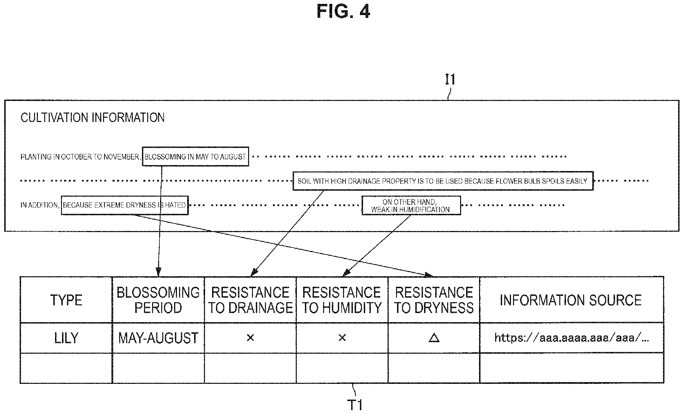

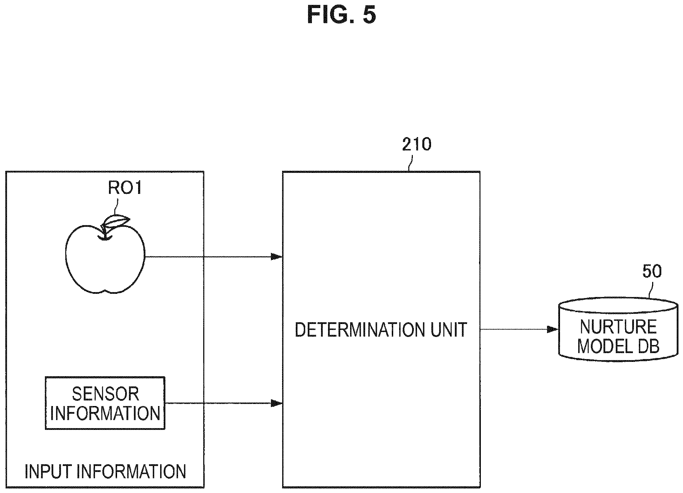

Next, the generation of a nurture model according to the present embodiment will be described in detail. As described above, the determination unit 210 according to the present embodiment has a function of generating a nurture model associated with a nurture target. Hereinafter, a generation example of a nurture model according to the present embodiment will be described in detail using FIGS. 4 and 5.

### (Generation of nurture model that is based on intellectual information)

The determination unit 210 according to the present embodiment may perform the generation of a nurture model on the basis of intellectual information, for example. Here, the above-described intellectual information may include information released over the internet, and document information such as research paper related to a nurture target that is held on the network 40, for example.

FIG. 4 is a conceptual diagram illustrating a relationship between intellectual information and a nurture model generated by the determination unit 210 on the basis of the intellectual information. Referring to FIG. 4, it can be seen that cultivation information related to a nurture target is described in intellectual information I1. In addition, a table T1 illustrated in FIG. 4 may be an example of a nurture model generated by the determination unit 210 on the basis of the intellectual information I1. In this manner, the determination unit 210 according to the present embodiment can generate a nurture model related to a nurture target, by analyzing intellectual information.

Specifically, as illustrated in FIG. 4, the determination unit 210 can search text information included in the intellectual information I1, for a keyword such as "blossoming", "drainage property", "dryness", and "humidification", and extract a nurture condition related to the keyword. Here, as described above, the intellectual information I1 may be information released over the internet, or document information held on the network 40. In other words, the determination unit 210 according to the present embodiment can dynamically generate a nurture model by searching intellectual information related to a nurture target.

At this time, on the basis of acquiring a more specific numerical value related to each item, the determination unit 210 may apply the numerical value to a nurture model. For example, in a case where the determination unit 210 acquires specific numerical values related to humidity and dryness, from another piece of intellectual information, the determination unit 210 can update corresponding item values listed on the table T1. In addition, the determination unit 210 may recognize nuance of text described in intellectual information, and automatically set a numerical value. For example, the determination unit 210 can also recognize text indicating "extreme dryness" that is included in the intellectual information I1, replace the text with "humidity 10%", and set the numerical value.

As described above, the determination unit 210 according to the present embodiment can dynamically generate a nurture model associated with a nurture target, on the basis of intellectual information. According to the above-described function that the determination unit 210 according to the present embodiment has, it becomes possible to automatically enhance accuracy related to a nurture model, by acquiring newly-released intellectual information.

### (Nurture model generation that uses machine learning)

Next, nurture model generation that uses machine learning according to the present embodiment will be described. The determination unit 210 according to the present embodiment may perform the generation of a nurture model on the basis of a result of machine learning that uses, as inputs, collected sensor information and a nurture state of a real object recognized by the recognition unit 120. FIG. 5 is a conceptual diagram for describing nurture model generation that uses machine learning according to the present embodiment.

The example illustrated in FIG. 5 illustrates a case where the determination unit 210 generates a nurture model of an apple serving as a nurture target, on the basis of a nurture state of a real object RO1 being an apple, and sensor information collected in a real environment in which the real object RO1 exists. In other words, the determination unit 210 according to the present embodiment can generate a nurture model related to a nurture target of the same type as the real object RO1, on the basis of a growth result of the real object RO1 cultivated in the real environment, and cultivation action data related to the real object RO1 that is based on the sensor information.

Here, a recognition result obtained by the recognition unit 120 may be used as a growth result of the real object RO1. The recognition unit 120 can recognize a color, a size, a shape, and the like of the real object RO1 on the basis of information acquired by an image capturing sensor, an ultrasonic sensor, and the like, for example. In addition, the cultivation action data that is based on sensor information may include various types of information related to temperature and a soil nutrient state.

At this time, the determination unit 210 according to the present embodiment may generate a nurture model related to a nurture target of the same type (the same breed variety) as the real object RO1, by using a machine learning algorithm that uses the above-described cultivation action data as a feature amount, and the growth result of the real object RO1 as a label. The determination unit 210 can use a learning model such as a Support Vector Machine (SVM), a Hidden Markov Model (HMM), and a Recurrent Neural Network (RNN), for example.

In this manner, by the determination unit 210 generating a nurture model using machine learning that uses, as inputs, a growth result of the real object RO1 and the cultivation action data, it becomes possible to generate a highly-accurate nurture model that is closer to the real environment.

Note that the determination unit 210 according to the present embodiment may aggregate cultivation action data collected in a plurality of real environments, and generate a common nurture model. In this case, it is also possible to generate a nurture model having higher versatility, by using data related to real objects that are obtained under different conditions at a plurality of points.

### <<1.7. Details of nurture state determination>>

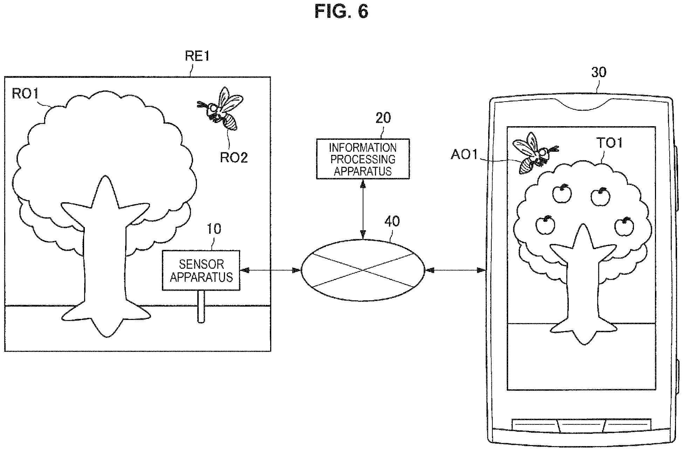

The details of nurture model generation according to the present embodiment have been described above. Next, nurture state determination of a nurture target that is performed by the determination unit 210 according to the present embodiment will be described in detail. As described above, the determination unit 210 according to the present embodiment can determine, on the basis of collected sensor information and a nurture model associated with a nurture target, a nurture state of the nurture target. Hereinafter, a specific example of nurture state determination according to the present embodiment will be described in detail using FIGS. 6 to 9. Note that the following description will be given using, as an example, a case where a nurture target is an apple.

### (Nurture state determination that is based on recognition result of real object)

First of all, nurture state determination that is based on a recognition result of a real object according to the present embodiment will be described. The determination unit 210 according to the present embodiment may determine a nurture state of a nurture target on the basis of a result of real object recognition that is obtained by the recognition unit 120. At this time, the determination unit 210 can determine the above-described nurture state on the basis of a nurture state or a type of a real object.

FIG. 6 is a conceptual diagram for describing nurture state determination that is based on a recognition result of a real object. Referring to FIG. 6, the real object RO1 being an apple and a real object RO2 being an insect exist in the real environment RE1. The recognition unit 120 of the sensor apparatus 10 according to the present embodiment can recognize the real objects RO1 and RO2 on the basis of sensor information collected by the sensor unit 110, and object information included in the real object DB 70.

In addition, in the example illustrated in FIG. 6, the information processing apparatus 20 determines a nurture state of a nurture target TO1 on the basis of the sensor information and the real object information that have been received from the sensor apparatus 10, and causes the nurture state to be displayed on the output apparatus 30.

Here, the real object RO1 and the nurture target TO1 may be apples of different breed varieties. Self-incompatibility is reported in a part of rosaceae plants including apples. In other words, because apples have such a property that, even if pollination is performed using pollens of the same breed variety, bearing is not caused, pollens produced by apples of different breed varieties are required for normal seed formation. Thus, the determination unit 210 according to the present embodiment may determine a nurture state of the nurture target TO1 on the basis of the recognition unit 120 recognizing the real object RO1 being an apple of a breed variety different from the nurture target TO1. In addition, the determination unit 210 can also determine the nurture state on the basis of the real object RO1 blossoming, which is not illustrated in the drawing. In other words, the determination unit 210 according to the present embodiment may determine a nurture state of a nurture target on the basis of a nurture state or a type of a real object.

In addition, the real object RO2 illustrated in FIG. 6 may be a flower visiting insect such as a honeybee and hornfaced bee, for example. Unlike wind-pollinated flowers that cause pollens to be carried by wind, apples are insect-pollinated flowers that depend on the above-described flower visiting insects in pollination. In other words, apples have such a property that, in a case where artificial pollination is not performed, bearing is not caused under the environment in which a flower visiting insect does not exist. Thus, the determination unit 210 according to the present embodiment may determine a nurture state of the nurture target TO1 on the basis of the recognition unit 120 recognizing a flower visiting insect such as the real object RO2. In addition, the output control unit 220 according to the present embodiment may control display related to the nurture target, on the basis of a recognized real object. In the example illustrated in FIG. 6, the output control unit 220 causes a recognized object AO1 to be displayed on the output apparatus 30, on the basis of information regarding the recognized real object RO2.

As described above, the information processing apparatus 20 according to the present embodiment can determine a nurture state of a nurture target on the basis of a recognition result of a real object. In the example illustrated in FIG. 6, the information processing apparatus 20 determines a nurture state related to pollination of the nurture target TO1, on the basis of the real objects RO1 and RO2 recognized by the sensor apparatus 10, and causes the fruit-bearing nurture target TO1 to be displayed on the output apparatus 30.

In this manner, according to the information processing apparatus 20 according to the present embodiment, it becomes possible to predict a growth result of a nurture target on the basis of the behavior of a real object existing in a real environment. In other words, according to the information processing apparatus 20 according to the present embodiment, it is possible to implement highly-accurate nurture prediction closer to a real environment.

Note that the above description has been given of an example related to bearing of apples, but the information processing apparatus 20 according to the present embodiment can perform various types of determination that are based on a recognized real object. For example, in a case where a nurture target is a strawberry, by recognizing a sage existing as a real object, it is also possible to determine a nurture state of the nurture target. The information processing apparatus 20 can also perform more advanced nurture state determination by applying a combination suitable for symbiotic cultivation, such as a strawberry and a sage, as a nurture model.

In addition, the information processing apparatus 20 may determine a nurture state of a nurture target on the basis of information regarding plant hormone such as ethylene and auxin that is collected from a real object. In this case, the information processing apparatus 20 can perform prediction of a nurture result that conforms more closely to a real environment.

### (Nurture state determination of plurality of targets)

Next, nurture state determination of a plurality of targets according to the present embodiment will be described. The determination unit 210 according to the present embodiment can determine nurture states related to a plurality of nurture targets, on the basis of sensor information collected at a single point.

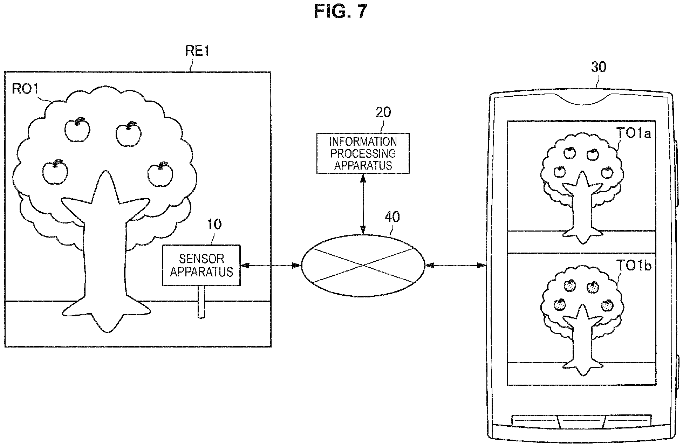

FIG. 7 is a conceptual diagram for describing nurture state determination of a plurality of targets according to the present embodiment. Referring to FIG. 7, the information processing apparatus 20 determines nurture states of a plurality of nurture targets TOla and TOlb on the basis of sensor information collected in a single real environment RE1, and causes the nurture states to be displayed on the output apparatus 30.

Here, for example, the nurture targets TO1a and TO1b may be apples of breed varieties different from each other. In other words, the information processing apparatus 20 according to the present embodiment can determine nurture states related to nurture targets of a plurality of breed varieties, on the basis of sensor information collected in the single real environment RE1. At this time, the determination unit 210 of the information processing apparatus 20 may determine the above-described nurture states using nurture models associated with the respective breed varieties.

According to the above-described function that the information processing apparatus 20 according to the present embodiment has, growth results of a plurality of breed varieties can be compared on the basis of sensor information collected from the same environment. In other words, according to the information processing apparatus 20 according to the present embodiment, it becomes possible to recognize a nurture target suitable for each real environment, and highly-efficient production of agricultural products can be implemented.

Note that the above description has been given using, as an example, a case where nurture targets of different breed varieties in the same plant variety are used, but the information processing apparatus 20 according to the present embodiment may determine nurture states of different plant varieties on the basis of sensor information collected from a single point. Also in this case, such an effect that a plant variety suitable for nurture can be discovered for each real environment is expected.

### (Nurture state determination that uses sensor information pieces at plurality of points)

Next, nurture state determination that uses sensor information pieces at a plurality of points according to the present embodiment will be described. The determination unit 210 according to the present embodiment can determine a nurture state related to a nurture target, on the basis of sensor information pieces collected at a plurality of points.

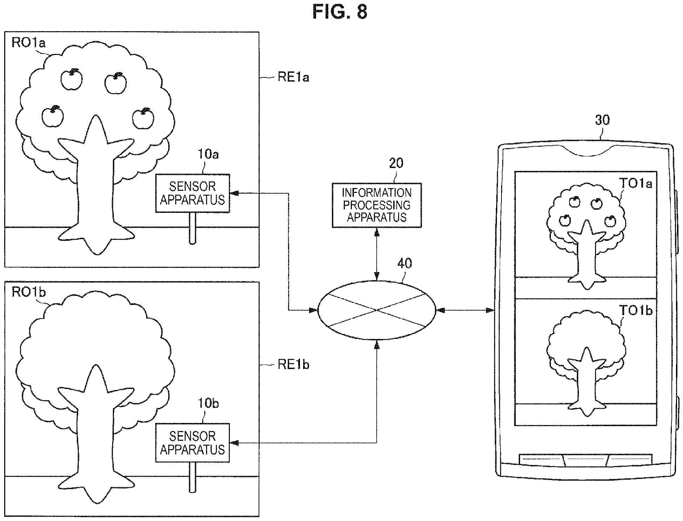

FIG. 8 is a conceptual diagram for describing nurture state determination that uses sensor information pieces at a plurality of points according to the present embodiment. Referring to FIG. 8, the information processing apparatus 20 determines nurture states of the plurality of nurture targets TO1 a and TO1b on the basis of sensor information pieces collected in a plurality of real environments RE1a and RE1b, and causes the nurture states to be displayed on the output apparatus 30.

Here, for example, the nurture targets TO1a and TO1b may be apples of the same breed variety. In other words, the information processing apparatus 20 according to the present embodiment can determine nurture states related to nurture targets of the same breed variety, on the basis of the sensor information pieces collected in the plurality of real environments REla and RE1b.

According to the above-described function that the information processing apparatus 20 according to the present embodiment has, growth results of nurture targets can be compared on the basis of sensor information pieces collected from a plurality of environments. In other words, according to the information processing apparatus 20 according to the present embodiment, it becomes possible to recognize a real environment suitable for cultivation of nurture targets, and highly-efficient production of agricultural products can be implemented.

### (Nurture state determination that uses accumulated sensor information pieces)

Next, nurture state determination that uses accumulated sensor information pieces according to the present embodiment will be described. The determination unit 210 according to the present embodiment can determine a nurture state related to a nurture target, on the basis of sensor information pieces accumulated in the past.

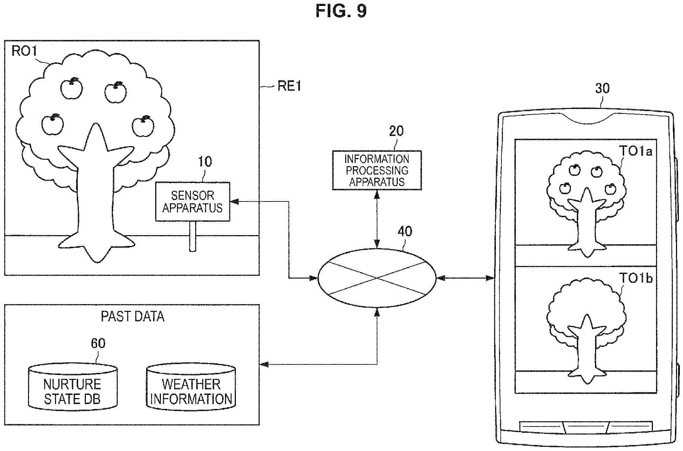

FIG. 9 is a conceptual diagram for describing nurture state determination that uses accumulated sensor information pieces according to the present embodiment. Referring to FIG. 9, the information processing apparatus 20 determines nurture states of the nurture targets TOla and TOlb on the basis of sensor information collected in real time in the real environment RE1, and accumulated past data, and causes the nurture states to be displayed on the output apparatus 30.

Here, the above-described past data may include sensor information pieces collected in the past that are stored in the nurture state DB 60, past weather information recorded by another means, and the like. After determining a nurture state of a nurture target on the basis of the sensor information collected in the real environment RE1, the information processing apparatus 20 according to the present embodiment can predict a future growth result to be obtained by applying sensor information pieces accumulated in the past, to the nurture target. In this case, the determination unit 210 may have a function of performing control related to growth speed of the nurture target.

For example, after determining a nurture state of a nurture target while using, in real time, sensor information pieces collected in the real environment RE1 by May being the current time point, the information processing apparatus 20 may execute the above-described prediction using sensor information pieces collected in June to August of the last year and the year before last. In the example illustrated in FIG. 9, the nurture target TOla displayed on the output apparatus 30 may be a growth prediction result obtained by applying the sensor information pieces collected in the last year, for example. In addition, the nurture target TOlb displayed on the output apparatus 30 may be a growth prediction result obtained by applying the sensor information pieces collected in the year before last, for example.

According to the above-described function that the information processing apparatus 20 according to the present embodiment has, it becomes possible to accurately predict a future growth of a nurture target on the basis of sensor information pieces accumulated in the past, and it becomes possible to utilize the prediction as a feedback for future cultivation.

### <<1.8. Control of output other than display>>

Next, control of an output other than display according to the present embodiment will be described. The output control unit 220 according to the present embodiment can perform output control related to an output other than display of a nurture target. Specifically, the output control unit 220 according to the present embodiment can control an output of scent corresponding to a nurture state of a nurture target. In addition, the output control unit 220 according to the present embodiment can control an output of flavor corresponding to a nurture state of a nurture target.

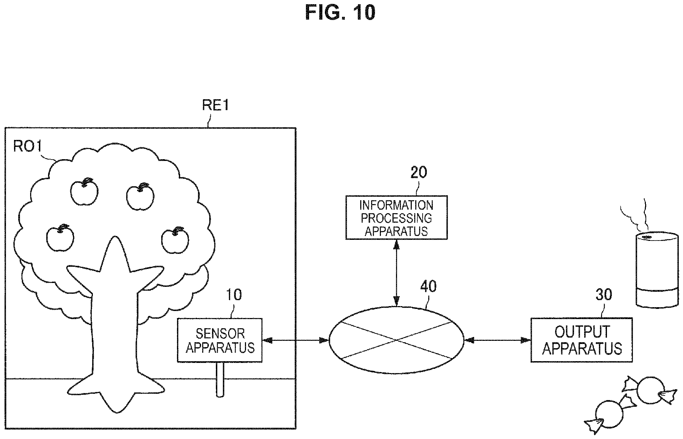

FIG. 10 is a conceptual diagram for describing output control of scent and flavor according to the present embodiment. Referring to FIG. 10, the information processing apparatus 20 causes the output apparatus 30 to output scent and flavor that correspond to a nurture state of a nurture target, on the basis of sensor information collected in the real environment RE1. At this time, the information processing apparatus 20 may perform output control using sensor information collected from the real object RO1, in addition to the sensor information collected in the real environment RE1. The information processing apparatus 20 may perform output control of the output apparatus 30 on the basis of sensor information related to sugar content or a sour component of the real object RO1, for example. In this case, the information processing apparatus 20 can obtain sugar content (Brix value) of the real object RO1 using a near-infrared spectroscopy or the like that is based on the sensor information, for example. In addition, the information processing apparatus 20 may control an output of scent and flavor of a nurture target, using sensor information related to vitamin C, citric acid, succinic acid, lactic acid, tartaric acid, acetic acid, or the like that is contained in the real object RO1.

In a case where the information processing apparatus 20 controls an output of scent related to a nurture target, the output apparatus 30 may be a fragrance device that sprays scent by processing essential oil as in an aroma diffuser, for example. In this case, the output apparatus 30 may select essential oil corresponding to a nurture state of a nurture target, from among preset essential oils, on the basis of the control of the information processing apparatus 20, or may perform blending of essential oils on the basis of the control of the information processing apparatus 20. The output apparatus 30 can also adjust an amount of essential oil to be sprayed, on the basis of the control of the information processing apparatus 20. In addition, the output apparatus 30 may be a manufacturing device that produces fragrance such as essential oil, on the basis of the control of the information processing apparatus 20. In this case, the output apparatus 30 can blend preset materials on the basis of the control of the information processing apparatus 20, and output scent corresponding to a nurture state of a nurture target.

In addition, in a case where the information processing apparatus 20 controls an output of flavor related to a nurture target, the output apparatus 30 may be a manufacturing device that produces candy, drink, or the like, for example. Also in this case, the output apparatus 30 can blend preset materials on the basis of the control of the information processing apparatus 20, and output flavor corresponding to a nurture state of a nurture target. In addition, the output apparatus 30 may be a device having a function of reproducing a three-dimensional structure of a target object as in a 3D printer, for example. In this case, the output apparatus 30 can also generate food in which a three-dimensional structure and flavor of a nurture target are reproduced using edible materials. In addition, the output apparatus 30 may be various types of food printers having an edible printing function.

As described above, according to the information processing apparatus 20 according to the present embodiment, it becomes possible to control an output of scent and flavor that correspond to a nurture state of a nurture target. In addition, user evaluation for the output scent and flavor can also be used as a feedback to a nurture model and a cultivation method. In this case, for example, by obtaining association between flavor highly appreciated by the user, and sensor information used for determination of a nurture state, an environment state or the like that affects predetermined flavor can be estimated. Note that the above description has been given using, as an example, a case of performing output control using sensor information collected from the real object RO1, but the information processing apparatus 20 according to the present embodiment can also control an output of scent and flavor on the basis only of a nurture state of a nurture target. In this case, the information processing apparatus 20 can cause taste and flavor assumed from the nurture state, to be output, by referring to a nurture model of a nurture target.

### <<1.9. Control of environment reproduction that is based on sensor information>>

Next, control of environment reproduction that is based on sensor information according to the present embodiment will be described. The information processing apparatus 20 according to the present embodiment can control, on the basis of sensor information collected in a real environment, reproduction of an environment state related to the real environment.

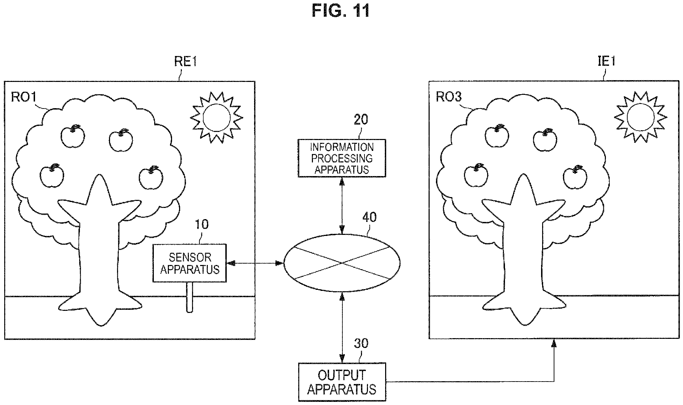

FIG. 11 is a conceptual diagram for describing control of environment reproduction that is based on sensor information according to the present embodiment. Referring to FIG. 11, the information processing apparatus 20 controls the generation of a reproduction environment IE1 that is performed by the output apparatus 30, on the basis of sensor information collected in the real environment RE1. Here, the reproduction environment IE1 may be an artificial environment obtained by locally reproducing an environment state of the real environment RE1 in equipment.

At this time, the output apparatus 30 may be an environment test device that generates the reproduction environment IE1 on the basis of the control of the information processing apparatus 20. The output apparatus 30 can adjust temperature, humidity, oxygen concentration, oxygen dioxide concentration, a soil state, and the like in the reproduction environment IE1, for example, on the basis of the control of the information processing apparatus 20. In other words, the output apparatus 30 has a function of reproducing at least part of the environment state of the real environment RE1 as the reproduction environment IE1.

As described above, the information processing apparatus 20 according to the present embodiment can control reproduction of an environment state that is based on sensor information collected in the real environment. In addition, as illustrated in FIG. 11, in the information processing method according to the present embodiment, cultivation of a real object RO3 can also be performed in the reproduction environment IE1. In other words, according to the information processing method according to the present embodiment, for example, it becomes possible to reproduce an environment state in a remote place, and perform test cultivation of the real object RO3 in the environment state. In this case, by comparing nurture states of the real object RO1 in the real environment RE1 and the real object RO3 in the reproduction environment IE1, an effect of identifying an environment element that affects the growth of the real object RO3 is also expected.

In addition, the information processing apparatus 20 according to the present embodiment may control the generation of the reproduction environment IE1 so as to be different from the real environment RE1 in partial environment states. The information processing apparatus 20 may generate the reproduction environment IE1 at temperature higher by five degrees than the real environment RE1, for example. In this manner, by the information processing apparatus 20 generating the reproduction environment IE1 in which a partial environment offset is changed, it is possible to further enhance an effect related to growth comparison between the real objects RO1 and RO3.

<<1.10. Flow of control performed by information processing apparatus 20>>

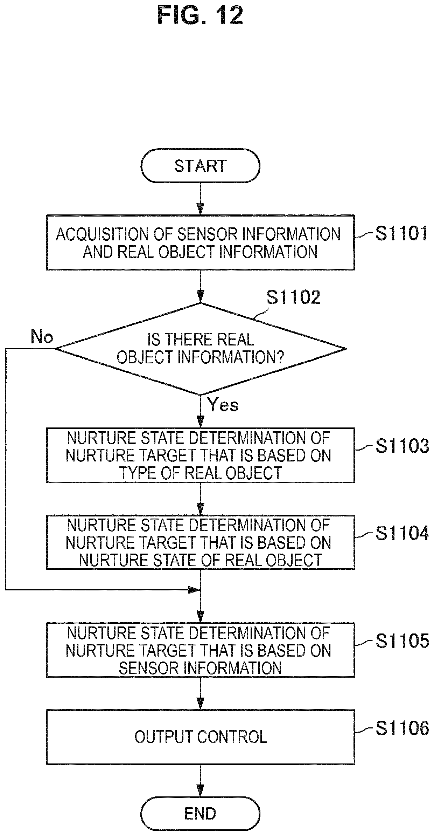

The above detailed description has been given mainly based on the functions that the information processing apparatus 20 according to the present embodiment has. Next, a flow of control performed by the information processing apparatus 20 according to the present embodiment will be described. FIG. 12 is a flowchart illustrating a flow of control performed by the information processing apparatus 20 according to the present embodiment.

Referring to FIG. 12, the communication unit 230 of the information processing apparatus 20 first receives sensor information and real object information from the sensor apparatus 10 (S1101). At this time, in a case where the information processing apparatus 20 has a function related to recognition of a real object, the information processing apparatus 20 may perform recognition of a real object on the basis of the received sensor information and object information included in the real object DB 70.

Next, the determination unit 210 determines whether or not real object information exists (S1102). Here, in a case where real object information exists (S1102: Yes), the determination unit 210 performs determination of a nurture state that is based on the type of a real object (S1103).

Subsequently, the determination unit 210 performs nurture state determination of a nurture target that is based on a nurture state of the real object (S1104). Note that the processes related to steps S1103 and S1104 need not be performed in the above-described order, or may be simultaneously performed.

In a case where the process in step S1104 is completed, or in a case where real object information does not exist (S1102: No), the determination unit 210 determines a nurture state of a nurture target on the basis of the sensor information received in step S1101 (S1105). Note that the determinations related to steps S1103 to S1105 need not be always performed independently. The determination unit 210 can comprehensively determine a nurture state of a nurture target on the basis of the sensor information and the real object information.

Next, the output control unit 220 performs control of an output related to the nurture target, on the basis of a determination result of a nurture state that is obtained by the determination unit 210 (S1106). At this time, the output control unit 220 may perform display control and output control of scent and flavor in accordance with the specification of the output apparatus 30. The output control unit 220 may simultaneously control display and an output of scent and flavor, or may perform output control of a plurality of output apparatuses 30.

A flow of control performed by the information processing apparatus 20 according to the present embodiment has been described above. As described above, the information processing apparatus 20 according to the present embodiment can determine, on the basis of sensor information collected in a real environment, and a nurture model associated with a nurture target, a nurture state of the nurture target. In addition, the information processing apparatus 20 according to the present embodiment can control various types of outputs related to the nurture target, in accordance with the above-described determined nurture state. According to the above-described function that the information processing apparatus 20 according to the present embodiment has, it becomes possible to highly-accurately predict a growth of a nurture target in various types of real environments.

Note that the description of the present embodiment has been given using an apple as an example of a nurture target, but the nurture target of the present embodiment is not limited to this example. A nurture target according to the present embodiment may be a live stock, fishes, an insect, and other general living organisms, for example. The information processing method according to the present embodiment can also be broadly applied to an industrial field other than agriculture.

In addition, the description of the present embodiment has been given while focusing on a single generation of a nurture target, but the information processing method according to the present embodiment can also determine states of a nurture target related to a plurality of generations. According to the information processing method according to the present embodiment, for example, state determination related to cross-fertilization and progeny formation of a nurture target that is based on sensor information can also be performed. The information processing method according to the present embodiment can be appropriately changed in accordance with the property of the nurture target.

### <2. Second embodiment>

### <<2.1. Overview of second embodiment>>

Next, an overview of a second embodiment in the present disclosure will be described. In the second embodiment of the present disclosure, there is proposed a game for enjoying a growth of a nurture target that is based on sensor information, as amusement.

In recent years, a variety of games that simulates a growth of a nurture target has been proposed. Nevertheless, because the above-described simulation is all executed in a virtual world, perception caused by five senses in nurturing a target is scarce, and it is difficult to perform sufficient nurture experience as real experience. On the other hand, in the case of raising a real living organism such as a pet, in addition to cost such as expense and caring, a sense of loss that is to be felt after the death of the living organism, and disposal problems can become a psychological barrier.

An information processing method according to the present embodiment has been conceived by focusing on points as described above, and can provide a nurture game that strongly leaves feeling as real experience, by collecting nurture behavior performed by the user, as sensor information, and determining a nurture state of a nurture target. In addition, in the information processing method according to the present embodiment, by performing the nurture of a nurture target on a virtual world, it becomes possible to exclude the above-described psychological barrier of nurture experience in the real world, and provide more facile nurture experience to the user.

Note that, in the present embodiment to be hereinafter described, the description will be given mainly based on a difference from the first embodiment, and the description of redundant functions will be omitted. In addition, in the second embodiment, the information processing apparatus 20 may have a function included in the sensor apparatus 10 or the output apparatus 30 that has been described in the first embodiment. In other words, the information processing apparatus 20 according to the present embodiment may further include configurations such as the sensor unit 110, the recognition unit 120, the output unit 310, and the input unit 320, in addition to the functional configuration described in the first embodiment. The functional configuration of the information processing apparatus 20 according to the present embodiment can be appropriately changed.

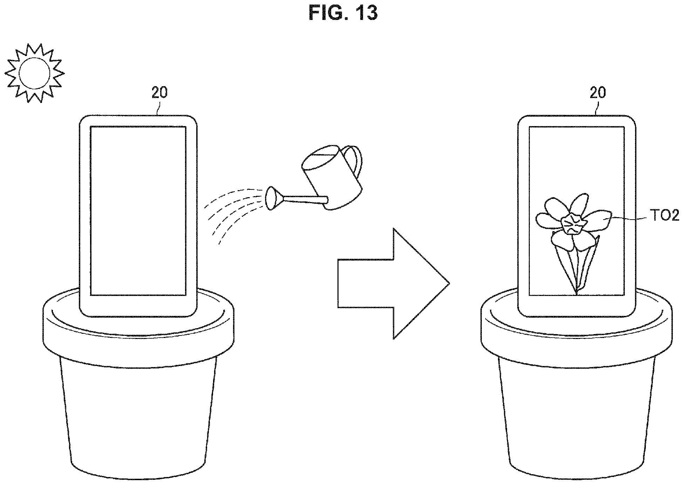

FIG. 13 is a conceptual diagram illustrating an overview of the present embodiment. As illustrated in FIG. 13, in the present embodiment, a nurture state of a nurture target may be determined on the basis of sensor information collected by the information processing apparatus 20 installed in a real environment, and display related to the nurture target may be controlled. Thus, in the example in FIG. 13, the information processing apparatus 20 is illustrated as a device including the output unit 310 including a display. In addition, in the example illustrated in FIG. 13, the information processing apparatus 20 further includes the sensor unit 110. At this time, the sensor unit 110 of the information processing apparatus 20 may include an illuminance sensor, a temperature sensor, a soil sensor, a carbon dioxide sensor, and the like, for example.

In addition, FIG. 13 exemplifies a case where the information processing apparatus 20 determines a nurture state of a flower serving as a nurture target, and controls the display of the flower. Thus, the information processing apparatus 20 is installed in a plant pot existing in a real world. At this time, the information processing apparatus 20 may be installed such that the soil sensor is inserted into soil in the plant pot. Note that the above-described soil sensor may be a sensor for measuring nutrient content and an amount of moisture of the soil, for example. Because the details of a sensor included in the soil sensor may be similar to that in the first embodiment, the description will be omitted.

In addition, the user can perform a variety of nurture actions on the information processing apparatus 20 installed as described above. In the case of the example illustrated in FIG. 13, the user can give water and fertilizer, and move the plant pot to a sunny location, for example, similarly to the cultivation of an actual flower.

At this time, the information processing apparatus 20 according to the present embodiment can collect a change in an environment state that is caused by the above-described nurture action, by sensor information, and determine a nurture state of a nurture target on the basis of the sensor information and a nurture model. In addition, the information processing apparatus 20 may perform display of the nurture target that corresponds to the determined nurture state. In other words, the information processing apparatus 20 according to the present embodiment can visualize a growth of the nurture target that corresponds to a nurture action of the user, and presents the growth to the user. According to the above-described function that the information processing apparatus 20 according to the present embodiment has, it becomes possible to provide sufficient nurture experience to the user while reducing the burden of nurturing a real living organism.

Note that the above description has been given using, as an example, a case where the information processing apparatus 20 controls the output unit 310 included in itself, but the information processing apparatus 20 according to the present embodiment may control display performed by the output apparatus 30 existing independently, similarly to the first embodiment. In this case, the information processing apparatus 20 may control Augmented Reality (AR) superimposition performed by the output apparatus 30, for example. The information processing apparatus 20 can also superimpose a nurture target between flowers blossoming in the real world, on the basis of a recognition result of real objects, for example.

In addition, the information processing apparatus 20 according to the present embodiment may display past and future nurture states in addition to the current nurture state of a nurture target. In this case, the output control unit 220 of the information processing apparatus 20 can control display content related to the nurture target, on the basis of a user manipulation recognized by the input unit 320. According to the above-described function that the information processing apparatus 20 has, it becomes possible for the user to check the recording of past nurture states related to the nurture target. In addition, according to the above-described function that the information processing apparatus 20 has, the user can check future nurture state prediction related to a future nurture target. At this time, the determination unit 210 of the information processing apparatus 20 may determine a nurture state of a nurture target that is caused after a certain period of time, using sensor information pieces collected in a past certain period of time.

### <<2.2. Variation of nurture target>>

Next, a variation of a nurture target according to the present embodiment will be described. The above description that uses FIG. 13 has been given using, as an example, a case where a flower is treated as a nurture target, but a nurture target according to the present embodiment may be a variety of living organisms. The user may nurture a nurture target preset in the information processing apparatus 20, or may be able to select a nurture target from among a plurality of candidates.

In addition, a nurture target according to the present embodiment may be decided on the basis of a photo, a moving image, or a variety of still objects. The information processing apparatus 20 according to the present embodiment can also recognize a subject from a photo or a moving image that is shot by the user, and decide the subject as a nurture target. In addition, the information processing apparatus 20 can also recognize a stationary article read by a 2D/3D scanner, a clay work generated by the user, or the like, and treats the recognized object as a nurture target. At this time, the information processing apparatus 20 can perform the above-described recognition by using object information included in the real object DB 70. In addition, the information processing apparatus 20 may extract the color of an image or a still object that serves as a recognition source, and set display color related to a nurture target. Hereinafter, a variation of a nurture target according to the present embodiment will be described using specific examples.

### (Nurture target: fish)

A nurture target according to the present embodiment may be a fish, for example. In this case, the information processing apparatus 20 may be a variety of devices including a display installed on an water tank integrally or additionally, for example. Using the sensor unit 110, the information processing apparatus 20 can measure illuminance, water temperature, water quality, a food amount, and the like that are related to an water tank environment. Here, the above-described water quality may include pH, hardness, chlorine concentration, salinity concentration, oxygen concentration, carbon dioxide concentration, or the like, for example.

The information processing apparatus 20 can determine a nurture state of a fish serving as a nurture target, on the basis of sensor information collected from the water tank environment, and display the determined nurture state on the display. At this time, the information processing apparatus 20 can also recognize an input of food that is performed by the user, by observing a state of an water surface using an image capturing sensor or the like, for example, and cause a state in which the nurture target approaches the food, or the like to be displayed. Note that the above-described food needs not be real food, and may be substituted by plastic particles or an water-soluble substance, for example. By using the above-described substitute, the water quality in the water tank environment can be maintained high.

In addition, the information processing apparatus 20 may recognize a face of the user viewing the water tank, for example, and perform display control such that the nurture target approaches the user. In addition, the information processing apparatus 20 can also recognize a real object such as a fish that exists in the water tank environment, and control the position of the nurture target to be displayed on the output unit 310. In this case, the information processing apparatus 20 may control the display such that the real object and the nurture target become uniform in the water tank, for example.

In addition, the information processing apparatus 20 can also control a nurture state of a nurture target and display in accordance with a type or the like of a recognized real object. For example, in a case where a recognized real object is a carnivorous animal, the information processing apparatus 20 may control display such that the number of fishes serving as nurture targets decreases along with the lapse of time. In this manner, the information processing apparatus 20 according to the present embodiment can determine a nurture state of a nurture target on the basis of a recognition result of a real object.

### (Nurture target: insect)

In addition, a nurture target according to the present embodiment may be an insect, for example. In this case, the information processing apparatus 20 may perform projection mapping of a nurture target in an insect cage existing in a real environment, for example. The information processing apparatus 20 can also recognize a recess and a protrusion of an object installed in the insect cage, and produce a state in which a nurture target stays on the object.

In addition, in a case where a nurture target is an insect, using the sensor unit 110, the information processing apparatus 20 can measure temperature, humidity, a food amount, an water amount, a soil state, and the like that are related to an insect cage environment. The information processing apparatus 20 can determine a nurture state of an insect serving as a nurture target, on the basis of sensor information collected from the insect cage environment, and cause the determined nurture state to be displayed by the projection mapping.

In addition, the output control unit 220 of the information processing apparatus 20 can also control an output of a sound corresponding to the determined nurture state of the nurture target. Specifically, the output control unit 220 may control an output of a sound obtained by reproducing a chirp sound or a wing sound, in accordance with the nurture state of the nurture target. In addition, in a case where the nurture target is a nocturnal insect, the output control unit 220 may adjust the sound volume and frequency of a chirp sound or a wing sound in accordance with the ambient brightness of the insect cage. According to the above-described function that the information processing apparatus 20 according to the present embodiment has, it becomes possible to implement representation closer to a real object

### (Nurture target: animal)

In addition, a nurture target according to the present embodiment may be an animal such as a mammal or a bird, for example. In this case, the information processing apparatus 20 may perform the AR superimposition of the nurture target, into an indoor space, a cage, or the like that exists in a real environment, for example. In addition, the information processing apparatus 20 can also perform the AR superimposition of the nurture target onto a stuffed toy, a robot, or the like. Alternatively, the information processing apparatus 20 may perform Virtual Reality (VR) display of the nurture target onto a Head Mounted Display (HMD) or the like.

At this time, the information processing apparatus 20 can determine a nurture state of a nurture target on the basis of contact of the user with respect to the stuffed toy or the robot, or a walking amount, feeling, or the like of the user. The above-described contact of the user may be information collected by a touch sensor included in the stuffed toy or the robot, for example. In addition, the walking amount and the feeling of the user may be information collected by an wearable device or the like that is worn by the user.

The information processing apparatus 20 can determine a tameness degree of the nurture target with respect to the user, on the basis of the frequency and the strength at which the user pets the stuffed toy. In addition, the information processing apparatus 20 may determine a behavioral pattern of the nurture target by regarding the walking amount of the user as a stroll amount, for example. Further, the information processing apparatus 20 may control the nurture target to perform predetermined behavior, on the basis of the feeling of the user.

### (Nurture target: personalized character)

In addition, a nurture target according to the present embodiment may be a personalized character. Here, the above-described character may include a robot, anthropomorphic animal and plant, and the like, for example. In this case, the information processing apparatus 20 can cause the nurture target to be displayed on a full-length mirror or the like, for example. In addition, at this time, the information processing apparatus 20 may determine a nurture state of the nurture target on the basis of speech of the user or conversation made between the user and the nurture target. For example, the information processing apparatus 20 may determine the tameness degree of the nurture target in accordance with an amount of the above-described conversation. In addition, for example, the information processing apparatus 20 may perform control such that behavior of the nurture target changes on the basis of music collected by a microphone.

### (Nurture target: fungus)

In addition, a nurture target according to the present embodiment may be various types of fungi. Here, the above-described fungi may include a true fungus and a bacterium. In this case, the information processing apparatus 20 may be a device including a microscopic display, for example. In a case where a nurture target is fungi, using the sensor unit 110, the information processing apparatus 20 can measure temperature, humidity, an amount of oxygen, pH, pressure, salinity concentration, and the like that are related to a petri dish existing in a real environment, or a designated location such as a kitchen. The information processing apparatus 20 can determine a nurture state of fungi serving as a nurture target, on the basis of collected sensor information, and control display of the nurture target.

In addition, the information processing apparatus 20 may perform the above-described determination and display control on the basis of user behavior and vital-related information. For example, on the basis of recognizing, from sensor information, that an eating habit of the user is bad, it is also possible to perform display control so as to enlarge the colony of Helicobacter pylori.

### <<2.3. Output control according to second embodiment>>

A variation of a nurture target according to the present embodiment has been described above. Next, output control common to nurture targets according to the present embodiment will be described using example.

### (Display control that is based on surrounding environment)

First of all, display control that is based on a surrounding environment according to the present embodiment will be described. The information processing apparatus 20 according to the present embodiment can perform display control of a nurture target in accordance with a surrounding real environment recognized by sensor information.

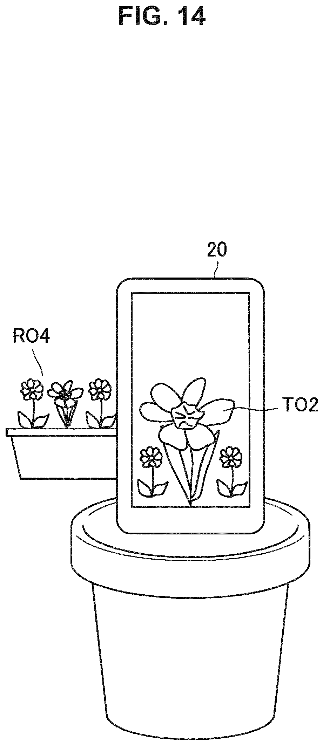

FIG. 14 is an image diagram illustrating an example of display control that is based on a surrounding environment according to the present embodiment. Referring to FIG. 14, the information processing apparatus 20 causes a real object RO4 positioned on the rear part, to be displayed on the output unit 310 together with a nurture target TO2. In this manner, the information processing apparatus 20 according to the present embodiment can display an image captured by an image capturing sensor or the like that is included in the rear part, together with the nurture target. According to the above-described function that the information processing apparatus 20 has, it becomes possible to implement display of the nurture target that fits in the surrounding environment more naturally.

In addition, at this time, the information processing apparatus 20 may adjust a field angle of an image to be displayed together with the nurture target, on the basis of image information shot by a wide-angle camera, and detected visual line information of the user. By performing the above-described control, the information processing apparatus 20 can perform more natural display corresponding to an angle and a visual distance of the visual line of the user.

Further, the information processing apparatus 20 may generate a 3DCG model of a real object on the basis of a recognition result obtained by the recognition unit 120, and cause the 3DCG model to be displayed on the output unit 310. In this case, the information processing apparatus 20 can adjust a display angle related to the above-described 3DCG model, on the basis of the detected visual line of the user.

In addition, the information processing apparatus 20 according to the present embodiment may perform display control on the basis of a surrounding environment other than a real object. For example, on the basis of rainfall being estimated from collected sensor information, the information processing apparatus 20 may control depiction of rain. In addition, for example, on the basis of wind of predetermined strength or more being estimated from collected sensor information, the information processing apparatus 20 may control such depiction that the nurture target sways in the wind.

In addition, the information processing apparatus 20 may represent phototropism corresponding to a nurture target, on the basis of the intensity and the direction of light that are included in the sensor information. For example, in a case where a nurture target is a heliotropic plant, the information processing apparatus 20 can perform nurture state determination and display control such that the nurture target extends toward the direction of light. According to the above-described function that the information processing apparatus 20 according to the present embodiment has, it becomes possible to implement representation of a nurture target that is closer to a real environment.

### (Display of nurture target that is performed by plurality of output units 310)

Next, display of a nurture target that is performed by a plurality of output units 310 according to the present embodiment will be described. The information processing apparatus 20 according to the present embodiment can couple a plurality of output units 310, and cause a nurture target to be displayed on the plurality of output units 310.

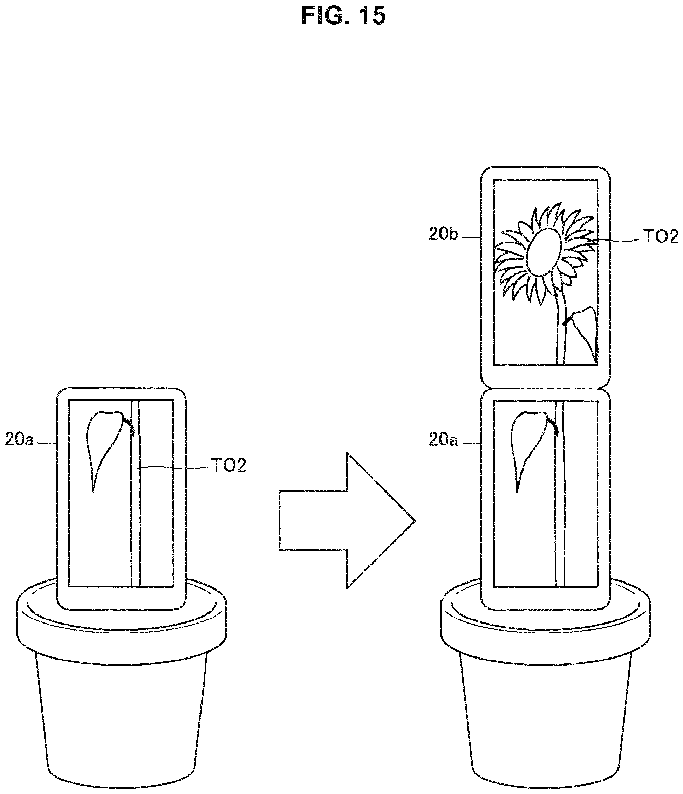

FIG. 15 is an image diagram illustrating an example of display of a nurture target that is performed by a plurality of output units 310 according to the present embodiment. On the left side in FIG. 15, a single information processing apparatus 20a is illustrated, and the nurture target TO2 is displayed on the output unit 310 of the information processing apparatus 20a. Nevertheless, because the nurture target TO2 has a size larger than a screen region of the output unit 310, only a stem portion of the nurture target TO2 is displayed on the output unit 310.

On the other hand, on the right side in FIG. 15, a plurality of information processing apparatuses 20a and 20b are illustrated. Here, the information processing apparatuses 20a and 20b may be in a state of being coupled to each other. Referring to FIG. 15, it can be seen that the entire picture of the nurture target TO2 is displayed on the coupled information processing apparatuses 20a and 20b. In this manner, the information processing apparatus 20 according to the present embodiment can control display of a nurture target that is related to a plurality of output units 310. According to the above-described function that the information processing apparatus 20 according to the present embodiment has, flexible display control corresponding to a nurture state of a nurture target can be performed, and in addition, it becomes possible to handle a larger number of nurture targets.

### (Output control related to wearable-type output apparatus 30)

Next, output control related to an wearable-type output apparatus 30 in the present embodiment will be described. The information processing apparatus 20 according to the present embodiment can control an output of a nurture target that is performed by the wearable-type output apparatus 30. More specifically, the information processing apparatus 20 according to the present embodiment can cause the wearable-type output apparatus 30 to display a three-dimensional video related to the nurture target.

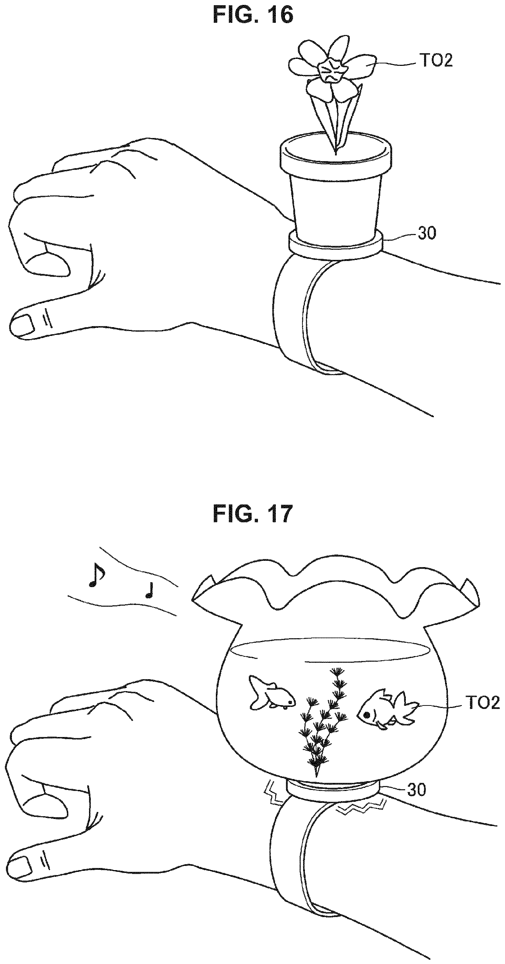

FIG. 16 is an image diagram illustrating an example of a three-dimensional video displayed by the wearable-type output apparatus 30. In the example illustrated in FIG. 16, the wearable-type output apparatus 30 displays a three-dimensional video related to the nurture target TO2, on the basis of the control of the information processing apparatus 20. At this time, the output unit 310 of the output apparatus 30 may include a glasses-type or glasses-free three-dimensional display.

In this manner, by using the wearable-type output apparatus 30 for the display of a nurture target, it becomes possible to carry the nurture target to a movement destination of the user, and provide more familiar nurture experience to the user. In addition, in a case where the output apparatus 30 includes the sensor unit 110, a nurture state of a nurture target and display content can also be controlled in accordance with a real environment of a destination that the user visits.

FIG. 17 is an image diagram illustrating another type of output control related to an wearable-type output apparatus 30. In the example illustrated in FIG. 17, the wearable-type output apparatus 30 outputs a sound and vibration that correspond to an operation of a nurture target TO2, on the basis of the control of the information processing apparatus 20. In other words, the information processing apparatus 20 according to the present embodiment can control a sound output and a haptic output that correspond to operation display of a nurture target.

The information processing apparatus 20 according to the present embodiment may cause an operation in which the nurture target TO2 being a fish plops over an water surface, for example, to be displayed, and at the same time, cause the output apparatus 30 to output a sound corresponding to the operation. In addition, the information processing apparatus 20 can control display of an operation in which the nurture target TO2 being a fish pecks an water tank, or an operation in which the nurture target TO2 bites a finger or the like of the user, for example, and at the same time, can control a haptic output corresponding to the operation. Here, in addition to vibration, an output using microcurrent, compression using air pressure or water pressure, a temperature change, or the like may be used for the haptic output according to the present embodiment. According to the above-described function that the information processing apparatus 20 according to the present embodiment has, the user can intuitively perceive an operation of a nurture target, and it becomes possible to implement representation of a nurture target that is closer to a real environment.

Note that the above description has been given using a wristwatch-type wearable device as an example, but the output apparatus 30 according to the present embodiment may be a pendant-type wearable device or a backpack-type wearable device, for example.

In addition, the above description has been given using, as an example, a case where the information processing apparatus 20 and the output apparatus 30 are independently formed, but the information processing apparatus 20 according to the present embodiment may be implemented as an wearable device including the output unit 310.

### (Output control of advertisement corresponding to sensor information)

Next, output control of an advertisement corresponding to sensor information according to the present embodiment will be described. The information processing apparatus 20 according to the present embodiment can output various types of advertisements on the basis of collected sensor information.

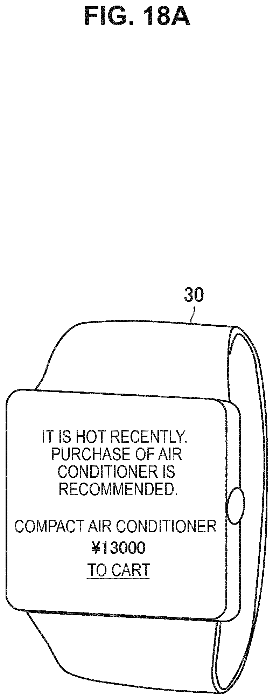

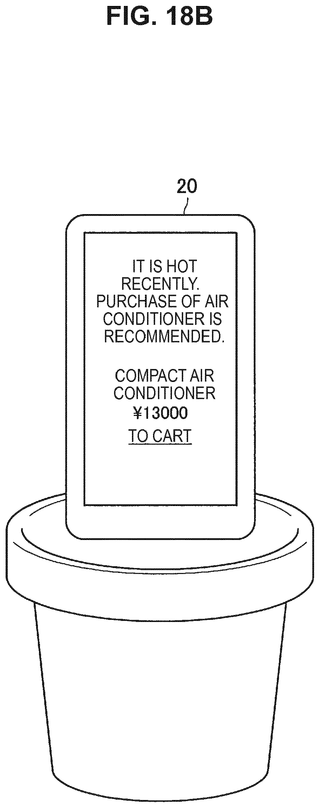

FIGS. 18A and 18B are image diagrams each illustrating a display example of an advertisement according to the present embodiment. Here, the example illustrated in FIG. 18A illustrates a case where the information processing apparatus 20 causes the wearable-type output apparatus 30 worn by the user, to output an advertisement. In addition, the example illustrated in FIG. 18B illustrates a case where the information processing apparatus 20 outputs an advertisement on the output unit 310 included in itself.

In the examples illustrated in FIGS. 18A and 18B, the information processing apparatus 20 recognizes, from collected sensor information, that high-temperature days continue, and controls an advertisement output related to an air conditioner. In this manner, the information processing apparatus 20 according to the present embodiment can control, on the basis of tendency recognized from collected sensor information, an output of an advertisement corresponding to the tendency.

At this time, the information processing apparatus 20 may cause a preset advertisement to be displayed, or may cause an advertisement acquired via the network 40, to be displayed. According to the above-described function that the information processing apparatus 20 according to the present embodiment has, it becomes possible to implement correct advertisement display that is based on sensor information collected from a real environment.

### <<2.4. Expansion of game element>>

An example of display control according to the present embodiment has been described above. Next, expansion of a game element according to the present embodiment will be described. The information processing apparatus 20 according to the present embodiment may have a variety of functions for expanding the game element.

### (Collection of nurture target)

The information processing apparatus 20 according to the present embodiment may have a collection function of a nurture target. The information processing apparatus 20 can record the recording of a nurture target nurtured by the user, onto the nurture state DB 60, and cause the recording to be displayed on the output unit 310, on the basis of a user manipulation. In addition, the determination unit 210 of the information processing apparatus 20 may grant a medal, a badge, a trophy, or the like for applauding the performance of the user, in accordance with the above-described recording of the nurture target. For example, in a case where the user has nurtured tulips in three colors including red, blue, and yellow, the determination unit 210 may determine a nurture recording, and grant a "three color tulips badge" or the like.

In addition, control may be performed such that a nurture target that has been once collected can be nurtured again. The information processing apparatus 20 can also select a nurture target from among the collection, on the basis of a user manipulation, and start nurture again. At this time, the information processing apparatus 20 may nurture the above-described nurture target from the state of seed or egg, or may start nurture from an arbitrary nurture state designated by the user (e.g. a germinated state, a pupal state, etc.). By the information processing apparatus 20 having the above-described collection function, it becomes possible to enhance a sense of purpose of the user for nurture.

### (Collection of environment state)

In addition, the information processing apparatus 20 according to the present embodiment may have a collection function of an environment state. The information processing apparatus 20 can record the recording of collected sensor information onto the nurture state DB 60, and treat the recording as collection of environment states. In addition, the determination unit 210 may grant a medal, a badge, a trophy, or the like for applauding the performance of the user, in accordance with an environment state to be recorded. For example, in a case where the user nurtures a nurture target using soil with high nutrient content, the determination unit 210 may grant a "healthy soil badge" or the like. By the information processing apparatus 20 having the above-described function, it becomes possible to enhance a sense of purpose of the user for nurture.

### (In-game tem)

In addition, the information processing apparatus 20 according to the present embodiment may have a function of granting various types of items that can be used in a game, to the user. For example, the determination unit 210 can determine, from sensor information, that the user has performed watering by seven every morning for a predetermined period or more, and grant an in-game item. Here, the above-described in-game item may be an item for applying an environment state different from a real environment, to a nurture target, for example. As an in-game item, for example, "artificial sunlight" that can apply a sunny environment to a nurture target even in a case where it rains in a real environment, or the like may be used. According to the above-described function that the information processing apparatus 20 has, a game element related to nurture experience can be further enhanced.

### (Setting of nurture speed and environment offset)

In addition, the information processing apparatus 20 according to the present embodiment may have a function related to the setting of a nurture speed and an environment offset. Specifically, the information processing apparatus 20 may perform control of speeding up a nurture speed of a nurture target on the basis of the designation of the user. For example, the determination unit 210 of the information processing apparatus 20 can also determine nurture states corresponding to two days, using sensor information corresponding to one day. In this case, for example, it becomes possible to nurture an annual plant twice in a year of the real world.

In addition, the information processing apparatus 20 may perform change control of an environment offset on the basis of the designation of the user. For example, the determination unit 210 can set water temperature higher by five degrees than collected water temperature in a real environment, and determine a nurture state of a nurture target. In this case, for example, it becomes possible to treat a tropical fish such as a piranha, as a nurture target, using an water tank in a real environment that can only handle water temperature up to an upper limit of 20 degrees. According to the above-described function that the information processing apparatus 20 has, it becomes possible for the user to perform nurture experience more easily. Note that the control of a nurture speed and an environment offset according to the present embodiment may be performed using the above-described in-game item.

### (Exchange and interchange of nurture target)

In addition, the information processing apparatus 20 according to the present embodiment may have a function related to exchange and interchange of a nurture target. The information processing apparatus 20 can implement the above-described function by communicating with another information processing apparatus 20 via the network 40. For example, the user may exchange a nurture target with another user, or may relocate a nurture target being nurtured, to the information processing apparatus 20 of another user, and ask the other user to perform caring and the like only for an arbitrary period.

In addition, the information processing apparatus 20 may have a function related to cross-fertilization of a nurture target. In this case, the information processing apparatus 20 can acquire, via the network 40, information regarding a nurture target controlled by another information processing apparatus 20, and produce a new nurture target. According to the above-described function that the information processing apparatus 20 has, it becomes possible to share nurture experience between users.

### (Nurture advice)

In addition, the information processing apparatus 20 according to the present embodiment may have a nurture advice function related to a nurture target. For example, on the basis of detecting, from collected sensor information, an amount of moisture that is equal to or larger than a threshold value, the information processing apparatus 20 may cause a warning related to excessive watering, to be displayed on the output unit 310. In addition, the information processing apparatus 20 can also recognize a nurture state of a real object existing in a real environment, and perform nurture advice by performing comparison with the real object. In this case, for example, on the basis of a nurture state of the real object being good, the information processing apparatus 20 may give advice so as to continue supply of water and nutrient as heretofore. According to the above-described function that the information processing apparatus 20 has, it becomes possible to aid a nurture action performed by the user, and support the user such that a good nurture result is obtained.

### (Nurture ranking)

In addition, the information processing apparatus 20 according to the present embodiment may have a function related to a nurture ranking. The information processing apparatus 20 may generate a ranking for comparing sizes, beauty, rareness degrees, and the like of nurture targets, for example, and may generate a ranking for comparing nurture speeds of nurture targets such as times required until blossoming. The information processing apparatus 20 can generate the above-described rankings by collecting pieces of information regarding nurture targets controlled by other information processing apparatuses 20, via the network 40. According to the above-described function that the information processing apparatus 20 has, it becomes possible to enhance a sense of purpose of the user for nurture, while sharing nurture experience between users.

### (Battle of nurture targets)

In addition, the information processing apparatus 20 according to the present embodiment may have a function related to a battle of nurture targets. The information processing apparatus 20 can implement the above-described function by communicating with another information processing apparatus 20 via the network 40. For example, the user may cause a nurtured insect to battle with an insect nurtured by another user. In this case, the information processing apparatus 20 may cause an insect nurtured by an opposing user, to be displayed in an insect cage in a real environment that each user has, by projection mapping, and may control a situation of the battle.

In addition, a battle of nurture targets according to the present embodiment may be implemented as a team battle performed by a plurality of users. In this case, the information processing apparatus 20 may control the above-described battle in a one-to-one team competition format, or may control the battle in a plural-to-plural survival format.

In addition, a battle of nurture targets according to the present embodiment can also cooperate with the above-described in-game item. For example, the information processing apparatus 20 may grant an in-game item to a user who has won a battle, or may grant a point or the like to be exchanged with an in-game item. In addition, the information processing apparatus 20 may deduct points owned by a user who has lost a battle, and grant points corresponding to the deduction, to a user who has won.

In addition, a battle of nurture targets according to the present embodiment can also cooperate with the above-described ranking. The information processing apparatus 20 can also rank and release a user or a team that has won a battle. According to the battle function that the information processing apparatus 20 has, it becomes possible to enhance a sense of purpose of the user for nurture, while sharing nurture experience between users.

### <<2.5. Cooperation with IoT device>>

Next, cooperation between the information processing apparatus 20 according to the present embodiment and an Internet of Things (IoT) device will be described. The information processing apparatus 20 according to the present embodiment can cooperate with a variety of IoT devices including home appliances and the like. Specifically, the information processing apparatus 20 according to the present embodiment can perform output control using sensor information collected by an IoT device. In addition, the information processing apparatus 20 can perform control of the IoT device on the basis of the collected sensor information.

### (Cooperation with air management device)

The information processing apparatus 20 according to the present embodiment may perform cooperation with various types of air management devices, for example. Here, the above-described air management devices may include an air conditioner, an air cleaner, compact meteorological equipment, and the like. The information processing apparatus 20 can determine a nurture state of a nurture target using sensor information collected by the air management device. The user can recognize that air in a room is dirty, by confirming that a flower serving as a nurture target is withered, for example.

In addition, on the basis of a good air state being continuously kept, the information processing apparatus 20 may cause a nurture target flower to blossom, or on the basis of a bad air state continuing, the information processing apparatus 20 may cause the nurture target to die. In this case, the user can recognize longer-term tendency of an air environment.

In addition, the information processing apparatus 20 may determine a nurture state of a nurture target on the basis of sensor information pieces collected by a plurality of air management devices. In this case, on the basis of sensor information pieces collected by the air management devices installed in respective rooms, for example, the information processing apparatus 20 may compare and cause nurture targets corresponding to environment states of the respective rooms, to be displayed. In addition, the information processing apparatus 20 may average the sensor information pieces of the respective rooms, and perform display control related to a single nurture target.

### (Cooperation with aroma diffuser)

In addition, the information processing apparatus 20 according to the present embodiment may perform cooperation with an aroma diffuser. For example, the information processing apparatus 20 can cause a growth of a nurture target at a timing at which the user gives water, and cause an aroma diffuser to spray scent corresponding to the nurture target. In this case, the user may preset the plant variety of the nurture target in the aroma diffuser. In addition, the aroma diffuser may select essential oil corresponding to a nurture state of the nurture target, from among preset essential oils, or may perform blending of essential oils on the basis of the control of the information processing apparatus 20.

### (Cooperation with camera)

In addition, the information processing apparatus 20 according to the present embodiment may perform cooperation with a camera. The information processing apparatus 20 can perform control of a nurture target and the like on the basis of behavior of a real object that is recognized from image capturing information acquired by the camera. For example, from the image capturing information acquired by the camera, the information processing apparatus 20 can also recognize such behavior that a child gets to bed by a predetermined time, and grant an in-game item or the like. According to the above-described function that the information processing apparatus 20 has, it becomes possible to promote behavior modification by utilizing such a mind of a child that a nurture target is desired to be nurtured well.

### (Cooperation with clock)

In addition, the information processing apparatus 20 according to the present embodiment may perform cooperation with a clock. The information processing apparatus 20 can perform function control of a clock on the basis of collected sensor information. For example, the information processing apparatus 20 can perform control such that an alarm of an alarm clock cannot be stopped until the user gives water. According to the above-described function that the information processing apparatus 20 has, it becomes possible to cause the user to perform both of an action of periodically giving water for nurturing a nurture target, and an action of surely getting out of bed.

### <3. Hardware configuration example>

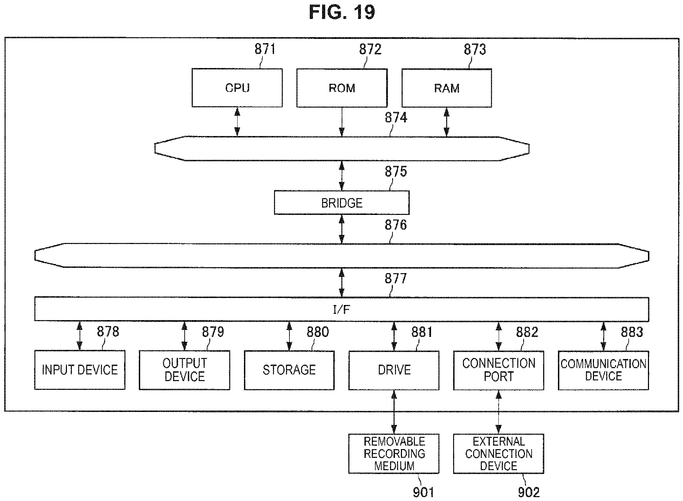

Next, a hardware configuration example common to the sensor apparatus 10, the information processing apparatus 20, and the output apparatus 30 according to the present disclosure will be described. FIG. 19 is a block diagram illustrating a hardware configuration example of the sensor apparatus 10, the information processing apparatus 20, and the output apparatus 30 according to the present disclosure. Referring to FIG. 19, the sensor apparatus 10, the information processing apparatus 20, and the output apparatus 30 each include a central processing unit (CPU) 871, a read-only memory (ROM) 872, a random access memory (RAM) 873, a host bus 874, a bridge 875, an external bus 876, an interface 877, an input device 878, an output device 879, a storage 880, a drive 881, a connection port 882, and a communication device 883, for example. Note that the hardware configuration illustrated here is an example, and a part of structural elements may be omitted. In addition, structural elements other than the structural elements illustrated here may be further included.

### (CPU 871)

The CPU 871 functions as, in one example, an arithmetic processing unit or a control unit, and controls the overall operation of each component or a part thereof on the basis of various programs recorded in the ROM 872, the RAM 873, the storage 880, or a removable recording medium 901.

### (ROM 872 and RAM 873)

The ROM 872 is a means for storing programs to be fetched by the CPU 871, data used for calculation, or the like. The RAM 873 temporarily or permanently stores, in one example, programs to be fetched by the CPU 871, various parameters appropriately changing at the time of executing the program, or the like.

### (Host bus 874, bridge 875, external bus 876, and interface 877)

The CPU 871, the ROM 872, and the RAM 873 are mutually connected via, in one example, the host bus 874 capable of high-speed data transmission. On the other hand, the host bus 874 is connected to the external bus 876 having a relatively low data transmission speed via, in one example, the bridge 875. In addition, the external bus 876 is connected to various components via the interface 877.

### (Input device 878)

Examples of the input device 878 include a mouse, a keyboard, a touch panel, a button, a switch, a lever, and the like. Further example of the input device 878 includes a remote controller capable of transmitting a control signal using infrared rays or other radio waves (hereinafter referred to as a remote controller).

### (Output device 879)

The output device 879 is a device capable of notifying visually or audibly the user of the acquired information, and examples thereof include a display device such as cathode ray tubes (CRTs), LCDs, or organic ELs, an audio output device such as speakers or headphones, a printer, a mobile phone, a facsimile, and the like. In addition, the output device 879 in the present disclosure includes various types of devices for making up scent, a device that generates various types of foods, a food printer that performs edible printing, and the like.

### (Storage 880)

The storage 880 is a device for storing various types of data. Examples of the storage 880 include a magnetic storage device such as hard disk drives (HDDs), a semiconductor storage device, an optical storage device, a magneto-optical storage device, and the like.

### (Drive 881)

The drive 881 is a device that reads out information recorded on the removable recording medium 901 such as a magnetic disk, an optical disk, a magneto-optical disk, or a semiconductor memory or writes information to the removable recording medium 901.

### (Removable recording medium 901)

The removable recording medium 901 is, in one example, a DVD medium, a Blu-ray (registered trademark) medium, an HD DVD medium, various kinds of semiconductor storage media, and the like. It may be apparent that the removable recording medium 901 may be, in one example, an IC card equipped with a contactless IC chip, an electronic device, or the like.

### (Connection port 882)

The connection port 882 is a port for connection with an external connection device 902, and examples thereof include a universal serial bus (USB) port, an IEEE 1394 port, a small computer system interface (SCSI), an RS-232C port, or an optical audio terminal.

### (External connection device 902)

The external connection device 902 is, in one example, a printer, a portable music player, a digital camera, a digital video camera, an IC recorder, or the like.

### (Communication device 883)

The communication device 883 is a communication device for connecting to a network, and examples thereof include a communication card for wired or wireless LAN, Bluetooth (registered trademark), or wireless USB (WUSB), a router for optical communication, a router for asymmetric digital subscriber line (ADSL), or a modem for various communication.

### <4. Conclusion>

As described above, the information processing apparatus 20 according to the present disclosure has a function of determining a nurture state of a nurture target on the basis of sensor information collected in a real environment, and a nurture model. In addition, the information processing apparatus 20 according to the present disclosure has a function of controlling, in accordance with a nurture state of a nurture target, various types of outputs related to the nurture target. In addition, the information processing apparatus 20 according to the present disclosure has a function of determining a nurture state of a nurture target on the basis of a recognition result of a real object existing in a real environment. According to this configuration, it becomes possible to implement display of a nurture target that conforms more closely to a real environment.

The preferred embodiment(s) of the present disclosure has/have been described above with reference to the accompanying drawings, whilst the present disclosure is not limited to the above examples. A person skilled in the art may find various alterations and modifications within the scope of the appended claims, and it should be understood that they will naturally come under the technical scope of the present disclosure.

Further, the effects described in this specification are merely illustrative or exemplified effects, and are not limitative. That is, with or in the place of the above effects, the technology according to the present disclosure may achieve other effects that are clear to those skilled in the art from the description of this specification.

Additionally, the present technology may also be configured as below.
(1) An information processing apparatus including:
   a determination unit configured to determine, on a basis of collected sensor information and a nurture model associated with a nurture target, a nurture state of the nurture target; and
   an output control unit configured to control an output related to the nurture target, in accordance with the nurture state of the nurture target.
(2) The information processing apparatus according to (1), in which the determination unit determines the nurture state of the nurture target on a basis of a result of recognition performed by a recognition unit configured to recognize an object on a basis of collected sensor information.
(3) The information processing apparatus according to (2), in which the determination unit determines the nurture state of the nurture target on a basis of a nurture state of the object.
(4) The information processing apparatus according to (2) or (3), in which the determination unit determines the nurture state of the nurture target on a basis of a type of the object.
(5) The information processing apparatus according to any one of (1) to (4), in which the determination unit determines the nurture state of the nurture target on a basis of accumulated sensor information.
(6) The information processing apparatus according to any one of (1) to (5), in which the determination unit determines the nurture state of the nurture target on a basis of sensor information pieces collected at a plurality of points.
(7) The information processing apparatus according to any one of (1) to (5), in which the determination unit determines nurture states of a plurality of the nurture targets on a basis of sensor information collected at a single point.
(8) The information processing apparatus according to any one of (1) to (7), in which
   the nurture model includes at least one or more nurture conditions for each element related to the nurture target, and
   the determination unit determines the nurture state of the nurture target on a basis of collected sensor information and the nurture conditions.
(9) The information processing apparatus according to any one of (1) to (8), in which the determination unit generates the nurture model on a basis of intellectual information.
(10) The information processing apparatus according to any one of (2) to (4), in which the determination unit generates the nurture model on a basis of collected sensor information and a nurture state of the object.
(11) The information processing apparatus according to (10), in which the determination unit generates the nurture model on a basis of a result of machine learning that uses, as inputs, collected sensor information and the nurture state of the object.
(12) The information processing apparatus according to any one of (2) to (4), in which the output control unit controls display related to the nurture target, on a basis of a result of recognition performed by the recognition unit.
(13) The information processing apparatus according to any one of (1) to (12), in which the output control unit controls a haptic output corresponding to operation display of the nurture target.
(14) The information processing apparatus according to any one of (1) to (13), in which the output control unit controls an output of scent corresponding to the nurture state of the nurture target.
(15) The information processing apparatus according to any one of (1) to (14), in which the output control unit controls an output of flavor corresponding to the nurture state of the nurture target.
(16) The information processing apparatus according to any one of (1) to (15), in which the output control unit controls an output of a sound corresponding to the nurture state of the nurture target.
(17) The information processing apparatus according to any one of (1) to (16), in which the output control unit controls reproduction of an environment state that is based on collected sensor information.
(18) A program for causing a computer to function as an information processing apparatus including:
   a determination unit configured to determine, on a basis of collected sensor information and a nurture model associated with a nurture target, a nurture state of the nurture target; and
   an output control unit configured to control an output related to the nurture target, in accordance with the nurture state of the nurture target.
(19) An information processing method including:
   determining, by a processor, on a basis of collected sensor information and a nurture model associated with a nurture target, a nurture state of the nurture target; and
   controlling an output related to the nurture target, in accordance with the nurture state of the nurture target.

### Reference Signs List

- 10: sensor apparatus
- 110: sensor unit
- 120: recognition unit
- 130: communication unit
- 20: information processing apparatus
- 210: determination unit
- 220: output control unit
- 230: communication unit
- 30: output apparatus
- 310: output unit
- 320: input unit
- 330: communication unit
- 40: network
- 50: nurture model DB
- 60: nurture state DB
- 70: real object DB

## Claims

1. An information processing apparatus comprising:
a determination unit configured to determine, on a basis of collected sensor information and a nurture model associated with a nurture target, a nurture state of the nurture target; and
an output control unit configured to control an output related to the nurture target, in accordance with the nurture state of the nurture target.

2. The information processing apparatus according to claim 1, wherein the determination unit determines the nurture state of the nurture target on a basis of a result of recognition performed by a recognition unit configured to recognize an object on a basis of collected sensor information.

3. The information processing apparatus according to claim 2, wherein the determination unit determines the nurture state of the nurture target on a basis of a nurture state of the object.

4. The information processing apparatus according to claim 2, wherein the determination unit determines the nurture state of the nurture target on a basis of a type of the object.

5. The information processing apparatus according to claim 1, wherein the determination unit determines the nurture state of the nurture target on a basis of accumulated sensor information.

6. The information processing apparatus according to claim 1, wherein the determination unit determines the nurture state of the nurture target on a basis of sensor information pieces collected at a plurality of points.

7. The information processing apparatus according to claim 1, wherein the determination unit determines nurture states of a plurality of the nurture targets on a basis of sensor information collected at a single point.

8. The information processing apparatus according to claim 1, wherein
the nurture model includes at least one or more nurture conditions for each element related to the nurture target, and
the determination unit determines the nurture state of the nurture target on a basis of collected sensor information and the nurture conditions.

9. The information processing apparatus according to claim 1, wherein the determination unit generates the nurture model on a basis of intellectual information.

10. The information processing apparatus according to claim 2, wherein the determination unit generates the nurture model on a basis of collected sensor information and a nurture state of the object.

11. The information processing apparatus according to claim 10, wherein the determination unit generates the nurture model on a basis of a result of machine learning that uses, as inputs, collected sensor information and the nurture state of the object.

12. The information processing apparatus according to claim 2, wherein the output control unit controls display related to the nurture target, on a basis of a result of recognition performed by the recognition unit.

13. The information processing apparatus according to claim 1, wherein the output control unit controls a haptic output corresponding to operation display of the nurture target.

14. The information processing apparatus according to claim 1, wherein the output control unit controls an output of scent corresponding to the nurture state of the nurture target.

15. The information processing apparatus according to claim 1, wherein the output control unit controls an output of flavor corresponding to the nurture state of the nurture target.

16. The information processing apparatus according to claim 1, wherein the output control unit controls an output of a sound corresponding to the nurture state of the nurture target.

17. The information processing apparatus according to claim 1, wherein the output control unit controls reproduction of an environment state that is based on collected sensor information.

18. A program for causing a computer to function as an information processing apparatus comprising:
a determination unit configured to determine, on a basis of collected sensor information and a nurture model associated with a nurture target, a nurture state of the nurture target; and
an output control unit configured to control an output related to the nurture target, in accordance with the nurture state of the nurture target.

19. An information processing method comprising:
determining, by a processor, on a basis of collected sensor information and a nurture model associated with a nurture target, a nurture state of the nurture target; and
controlling an output related to the nurture target, in accordance with the nurture state of the nurture target.
